# EUROPEAN PATENT SPECIFICATION

(11) **EP 3 941 249 B1**
(45) Date of publication and mention of the grant of the patent: **06.11.2024**
(21) Application number: 20710168.4
(22) Date of filing: 13.03.2020
(51) Int. Cl.: A24F 3/02, A24F 9/04, A24F 40/20, A24F 40/53, A24F 40/51, A24F 40/85

(54) **AEROSOL-GENERATING DEVICE AND SYSTEM WITH RESIDUE DETECTOR**
AEROSOLERZEUGUNGSVORRICHTUNG UND -SYSTEM MIT RÜCKSTANDSDETEKTOR
DISPOSITIF ET SYSTÈME DE GÉNÉRATION D'AÉROSOL COMPRENANT UN DÉTECTEUR DE RÉSIDUS

(30) Priority: 22.03.2019 EP 19164753
(43) Date of publication of application: 26.01.2022
(73) Proprietor: Philip Morris Products S.A., 2000 Neuchâtel (CH)
(72) Inventor: FRAKE, James, Cambridge Cambridgeshire CB22 7GG (GB); HOPKINSON, Paul, Cambridge Cambridgeshire CB22 7GG (GB)
(74) Representative: Reddie & Grose LLP
(86) International application number: PCT/EP2020/056982
(87) International publication number: WO 2020/193240

(56) References cited:
- US-A1- 2017 188 634
- US-A1- 2018 199 627

## Description

The present invention relates to aerosol-generating systems and aerosol-generating devices having means for detecting the build-up of aerosol-forming substrate residue on an aerosol-generating device.

Aerosol-generating systems in which an aerosol-forming substrate, such as a tobacco containing substrate, is heated rather than combusted are known in the art. The aim of such aerosol-generating systems is to reduce known harmful smoke constituents produced by the combustion and pyrolytic degradation of tobacco in conventional cigarettes. Typically, in such aerosol-generating systems, an aerosol is generated by the transfer of heat from a heater of an aerosol-generating device to an aerosol-forming substrate or material in an aerosol-generating article that is physically separate to the aerosol-generating device. The aerosol-generating article may be located within, around or downstream of the heater. During use, volatile compounds are released from the aerosol-forming substrate by heat transfer from the heater to the aerosol-forming substrate and entrained in air drawn through the aerosol-generating article. As the released compounds cool, they condense to form an aerosol that may be inhaled by a consumer.

Typically, aerosol-generating articles for use with aerosol-generating devices comprise an aerosol-forming substrate that is assembled, often with other elements or components, in the form of a rod. Typically, such a rod is configured in shape and size to be inserted into a cavity of an aerosol-generating device that comprises a heater for heating the aerosol-forming substrate. An aerosol-generating system in which an aerosol-generating article can be replaced without the need to remove and replace the heater of the aerosol-generating device is desirable, particularly to reduce the cost and complexity of manufacture of the aerosol-generating article.

US 2017/188634 A1 describes an aerosol-generating device including a heating element coupled to a controller, wherein the controller is programmed to actuate the heating element through: a first thermal cycle in which a temperature of the heating element is raised to a first temperature to form an aerosol from an aerosol-forming substrate disposed in proximity to the heating element; a second thermal cycle in which the temperature of the heating element is raised to a second temperature, higher than the first temperature, to thermally liberate organic material adhered to or deposited on the heating element; and the second thermal cycle automatically when the aerosol-forming substrate is removed from contact with the heating element.US 2018/199627 A1 describes self-cleaning hand-held vaporizer apparatuses including: an elongate body having a mouthpiece; a reservoir configured to contain a vaporizable fluid; an atomizer within the elongate body configured to form a vapor from the vaporizable fluid, the atomizer comprising: a heater; a draw sensor configured to detect a user drawing on the mouthpiece; and a controller configured to control the heater and to initiate a self-cleaning cycle during a period when the user is not drawing on the mouthpiece so that the heater is heated to a self-cleaning temperature of greater than 400° C. for a self-cleaning period of greater than 1 minute.

In some aerosol-generating systems, an aerosol-generating device comprises a heater having one or more heating elements arranged to surround an aerosol-generating article inserted into a cavity of the device. In some aerosol-generating systems, an aerosol-generating device comprises a heater having one or more heating elements arranged to penetrate an aerosol-generating article inserted into a cavity of the device, resulting in direct contact between the one or more heating elements and the aerosol-forming substrate in the article. Direct contact between a heating element and an aerosol-forming substrate may be desirable, as it provides efficient heating of the aerosol-forming substrate by the heating element and may enable heat from the heating element to be conveyed almost instantaneously to at least a portion of the aerosol-forming substrate, by conduction, facilitating rapid generation of an aerosol.

Interactions between an aerosol-generating device and an aerosol-generating article during use may result in deposits or residue, particularly from the aerosol-forming substrate, remaining on the walls of the cavity of the device and on the heater of the device after the article has been removed from the cavity. Such deposits or residue may adversely affect operation of the aerosol-generating system and the generation of aerosol.

It would be desirable to provide an aerosol-generating system that enables mitigation of the build-up of aerosol-forming substrate residue on the aerosol-generating device. It would be desirable to provide an aerosol-generating system that promotes efficient heat transfer between a heater and an aerosol-forming substrate. It would be desirable to provide an aerosol-generating system that promotes generation of aerosol having consistent properties.

According to a first aspect of the invention there is provided an aerosol-generating device comprising: a cavity for receiving an aerosol-generating article comprising an aerosol-forming substrate; a heater arranged to heat aerosol-forming substrate received in the cavity; a power supply; residue detection means; and a controller. The residue detection means is suitable for sensing aerosol-forming substrate residue in the cavity or on the heater. The controller is configured to: control the supply of power from the power supply to the heater to heat aerosol-forming substrate received in the cavity; receive signals from the residue detection means indicative of the amount of aerosol-forming substrate residue in the cavity or on the heater; and determine an indication of the amount of aerosol-forming substrate residue in the cavity or on the heater based on one or more signal received from the residue detector.

The inventors of the present invention have realised that the build-up of aerosol-forming substrate residue on and around the heater of an aerosol-generating device can adversely affect operation of the aerosol-generating device. For example, the build-up of residue on a heater of the device can increase the time required for the heater to reach a desired temperature. The inventors of the present invention have also realised that the build-up of aerosol-forming substrate residue on and around the heater of an aerosol-generating device can adversely affect the aerosol generated by the device. For example, heating of the aerosol-forming substrate residue over several uses of the system may result in the release of undesirable volatile compounds from the residue that alter the flavour of the aerosol generated by the system.

Advantageously, the aerosol-generating device of the first aspect of the present invention is provided with means for sensing aerosol-forming substrate residue remaining in the cavity or on the heater after an aerosol-generating article has been removed from the cavity, and a controller configured to receive signals from the residue detection means and determine an indication of the amount of aerosol-forming substrate residue remaining in the cavity or on the heater. The determination of an indication of the amount of aerosol-forming substrate residue remaining in the cavity or on the heater may enable the device to one or more of: alert a user to an unacceptable build-up of aerosol-forming substrate residue; take action to prevent further use of the device until the residue is removed; and perform actions to remove the residue.

As used herein, an 'aerosol-generating device' refers to a device that interacts with an aerosol-forming substrate to generate an aerosol. The aerosol-forming substrate may be part of an aerosol-generating article. As used herein, an aerosol-generating device is an electrically heated aerosol-generating device, comprising a heater, an electrical power supply and a controller configured to control a supply of energy from the power supply to the heater for heating an aerosol-forming substrate to generate an aerosol.

As used herein, the term 'aerosol-generating article' refers to an article comprising an aerosol-forming substrate that is capable of releasing volatile compounds that can form an aerosol. For example, an aerosol-generating article may be an article that generates an aerosol that is directly inhalable into a user's lungs through the user's mouth. An aerosol-generating article may be disposable. Preferably an aerosol-generating article is a heated aerosol-generating article, which is an aerosol-generating article comprising an aerosol-forming substrate that is intended to be heated rather than combusted in order to release volatile compounds that can form an aerosol. An aerosol-generating article may be, or may comprise, a tobacco stick.

As used herein, the term 'aerosol-forming substrate' relates to a substrate capable of releasing volatile compounds that can form an aerosol. Such volatile compounds may be released by heating the aerosol-forming substrate. The aerosol formed by heating the aerosol-forming substrate may contain fewer known harmful constituents than would be produced by combustion or pyrolytic degradation of the aerosol-forming substrate.

The aerosol-forming substrate may comprise nicotine. The aerosol-forming substrate may comprise both solid and liquid components. Preferably the aerosol-forming substrate is a solid aerosol-forming substrate. The aerosol-forming substrate may comprise tobacco, for example a tobacco-containing material containing volatile tobacco flavour compounds, which are released from the substrate upon heating. In preferred embodiments an aerosol-forming substrate comprises homogenised tobacco material, for example cast leaf tobacco.

The aerosol-forming substrate may comprise a non-tobacco material. The aerosol-generating substrate may comprise tobacco-containing material and non-tobacco containing material. The aerosol-forming substrate may comprise an aerosol former. Examples of suitable aerosol formers are glycerine and propylene glycol.

If the aerosol-forming substrate is a solid aerosol-forming substrate, the solid aerosol-forming substrate may comprise, for example, one or more of: powder, granules, pellets, shreds, spaghettis, strips or sheets containing one or more of: herb leaf, tobacco leaf, fragments of tobacco ribs, reconstituted tobacco, processed tobacco, homogenised tobacco, extruded tobacco and expanded tobacco. The solid aerosol-forming substrate may be in loose form, or may be provided in a suitable container or cartridge. For example, the aerosol-forming material of the substrate may be contained within a paper or wrap and have the form of a plug. Where an aerosol-forming substrate is in the form of a plug, the entire plug including any wrapping paper is considered to be the aerosol-forming substrate.

In preferred embodiments, the aerosol-forming substrate is contained in an aerosol-generating article, for example a rod-shaped article having a form similar to a cigarette. The aerosol-generating article is preferably of suitable size and shape to engage with the aerosol-generating device so as to bring the aerosol-forming substrate into contact with the heating element of the device. For example, the aerosol-generating article may have a total length between approximately 30 mm and approximately 100 mm. The aerosol-generating article may have an external diameter between approximately 5 mm and approximately 12 mm. The terms upstream and downstream may be used to describe relative positions of elements or components of the smoking article. For simplicity, the terms "upstream" and "downstream" as used herein refer to a relative position along the rod of the smoking article with reference to the direction in which the aerosol is drawn through the rod.

As used herein, the term 'aerosol-forming substrate residue' means organic materials adhered to or deposited in the cavity or on the heater. Aerosol-forming substrate residue typically comprises aerosol-forming substrate, which may or may not have been heated by the heater of the device to release volatile compounds. Aerosol-forming substrate residue may be deposited in the cavity or on the heater during any stage of use of the aerosol-generating device with an aerosol-generating article comprising an aerosol-forming substrate, such as when the article is inserted into the cavity, when the article is heated by the heater to release volatile compounds from the aerosol-forming substrate, and when the article is removed from the cavity.

In particular, aerosol-forming substrate residue refers to residue remaining in the cavity or on the heater after an aerosol-generating article has been removed from the cavity.

As used herein, references to aerosol-forming substrate residue 'in the cavity or on the heater' include residue in the cavity of the device, on the heater of the device and both in the cavity and on the heater of the device.

As used herein, the term 'residue detection means' refers to any device, apparatus or configuration of the aerosol-generating device to sense aerosol-forming substrate residue in the cavity or on the heater. The residue detection means includes both specific residue detectors and sensors provided in the aerosol-generating device to sense aerosol-forming substrate residue in the cavity or on the heater and aerosol-generating devices having heaters and controllers having a specific configuration to sense aerosol-forming substrate residue on the heater. Preferably, the residue detection means is configured to sense aerosol-forming substrate residue remaining in the cavity or on the heater after an aerosol-generating article comprising aerosol-forming substrate has been removed from the cavity.

As used herein, a determination of an 'indication' of the amount of aerosol-forming substrate residue in the cavity or on the heater refers to both determinations of absolute values of an amount of residue in the cavity or on the heater, such as a volume or thickness of residue, and determinations of relative values, such as comparisons to predetermined thresholds.

In some preferred embodiments, the controller is further configured to compare the determined indication of the amount of aerosol-forming substrate residue to a threshold. The threshold may be a predetermined threshold. The predetermined threshold may be stored on a memory of the controller. The threshold may be predetermined in a calibration procedure before the aerosol-generating device is used to generate aerosol.

The threshold may correspond to a maximum acceptable amount of aerosol-forming substrate residue in the cavity or on the heater. Accordingly, where the determined indication of the amount of aerosol-forming substrate residue exceeds the threshold, it may be determined that the amount of aerosol-forming substrate residue in the cavity or on the heater is above an acceptable amount.

The controller may be further configured to prevent power from being supplied from the power supply to the heater to heat aerosol-forming substrate in the cavity when the determined indication exceeds a threshold. Advantageously, terminating the supply of power to the heater for heating the aerosol-forming substrate may inhibit or prevent generation of aerosol by the aerosol-generating device when the amount of aerosol-forming substrate residue in the cavity or on the heater is above the acceptable level. This may ensure that aerosol generated by the aerosol-generating device does not contain unacceptable amounts of volatile compounds released when heating aerosol-forming substrate residue in the cavity or on the heater.

The controller may also be configured to continue to prevent power from being supplied from the power supply to the heater to heat aerosol-forming substrate in the cavity until a subsequent determined indication is equal to or below the threshold.

In some embodiments, the controller may be further configured to: supply power to the heater to raise the temperature of the heater to a first temperature for heating the aerosol-forming substrate received in the cavity sufficiently for an aerosol to be formed; and supply power to the heater to raise the temperature of the heater to a second temperature, higher than the first temperature, to thermally liberate organic materials adhered to or deposited in the cavity or on the heater.

The controller may be configured to raise the temperature of the heater to the second temperature when the determined indication exceeds the threshold.

It is preferred that the first temperature is a temperature high enough to cause the evolution of volatile compounds from the aerosol-forming substrate and, thus, the formation of an aerosol. It is preferred that the first temperature is below temperatures at which the aerosol-forming substrate burns.

Preferably the first temperature is lower than about 375 degrees centigrade. For example, the first temperature may be between 80 degrees centigrade and 375 degrees centigrade, for example between 100 degrees centigrade and 350 degrees centigrade. The length of time that the heater is held at the first temperature may be fixed. For example, the first temperature may be maintained for a period of greater than 2 seconds, for example between 2 seconds and 10 seconds. The length of time that the heater is held at the first temperature may be a variable. For example, the aerosol-generating device may comprise a sensor that determines when a user is drawing on the article and the time may be controlled by the length of time that the user draws on the article.

It is preferred that the second temperature is a temperature high enough to thermally liberate organic compounds that are in contact with the heater. In other words, the second temperature is a temperature high enough to liberate aerosol-forming substrate residue from the heater. Thermal liberation of organic compounds may occur by pyrolysis. Pyrolysis is a process in which chemical compounds decompose due to the action of heat. Organic compounds generally pyrolyse to form organic vapours and liquids, which in the present specification may migrate away from the heater leaving it in a cleaned state. Accordingly, the process of raising the temperature of the heater to the second temperature to liberate aerosol-forming substrate from the heater and the cavity may be referred to herein as a cleaning cycle or a pyrolysis cycle.

It is preferred that organic materials deposited on the heater are thermally liberated by raising the temperature of the heater to about 430 degrees centigrade or greater. For example, the temperature may be raised to greater than 475 degrees centigrade or greater than 550 degrees centigrade. The temperature may be raised to higher temperatures such as greater than 600 degrees centigrade or greater than 800 degrees centigrade.

It is preferable that the heater is held at the second temperature for a period of time to effect thermal liberation of organic compounds. For example, the heater may be held at the second temperature for more than 5 seconds. Preferably, the heater is held at the second temperature for a period of between 5 seconds and 60 seconds, for example between 10 seconds and 30 seconds.

The heater may be any suitable type of heater.

In some embodiments, the heater is arranged to heat the outer surface of the aerosol-forming substrate. In some preferred embodiments, the heater is arranged for insertion into an aerosol-forming substrate when the aerosol-forming substrate is received within the cavity. The heater may be positioned within the cavity. The heater may extend into the cavity. The heater may be an elongate heater. The elongate heater may be blade-shaped. The elongate heater may be pin-shaped. The elongate heater may be cone-shaped. In some particularly preferred embodiments, the aerosol-generating device comprises an elongate heater arranged for insertion into an aerosol-generating article when an aerosol-generating article is received within the cavity.

The heater may comprise at least one heating element. The at least one heating element may be any suitable type of heating element. In some embodiments, the device comprises only one heating element. In some embodiments, the device comprises a plurality of heating elements.

The heater may comprise at least one resistive heating element. Preferably, the heater comprises a plurality of resistive heating elements. Preferably, the resistive heating elements are electrically connected in a parallel arrangement. Advantageously, providing a plurality of resistive heating elements electrically connected in a parallel arrangement may facilitate the delivery of a desired electrical power to the heater while reducing or minimising the voltage required to provide the desired electrical power. Advantageously, reducing or minimising the voltage required to operate the heater may facilitate reducing or minimising the physical size of the power supply.

Suitable materials for forming the at least one resistive heating element include but are not limited to: semiconductors such as doped ceramics, electrically 'conductive' ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, nickel-, cobalt-, chromium-, aluminium- titanium- zirconium-, hafnium-, niobium-, molybdenum-, tantalum-, tungsten-, tin-, gallium-, manganese- and iron-containing alloys, and super-alloys based on nickel, iron, cobalt, stainless steel, Timetal^{®} and iron-manganese-aluminium based alloys.

In some embodiments, the at least one resistive heating element comprises one or more stamped portions of electrically resistive material, such as stainless steel. Alternatively, the at least one resistive heating element may comprise a heating wire or filament, for example a Ni-Cr (Nickel-Chromium), platinum, tungsten or alloy wire.

In some embodiments, the at least one heating element comprises an electrically insulating substrate, wherein the at least one resistive heating element is provided on the electrically insulating substrate.

The electrically insulating substrate may comprise any suitable material. For example, the electrically insulating substrate may comprise one or more of: paper, glass, ceramic, anodized metal, coated metal, and Polyimide. The ceramic may comprise mica, Alumina (Al₂O₃) or Zirconia (ZrOs). Preferably, the electrically insulating substrate has a thermal conductivity of less than or equal to about 40 Watts per metre Kelvin, preferably less than or equal to about 20 Watts per metre Kelvin and ideally less than or equal to about 2 Watts per metre Kelvin.

Preferably the heater comprises a heating element comprising a rigid electrically insulating substrate with one or more electrically conductive tracks or wire disposed on its surface. Preferably the size and shape of the electrically insulating substrate allow it to be inserted directly into an aerosol- forming substrate. If the electrically insulating substrate is not sufficiently rigid, the heating element may comprise a further reinforcement means. A current may be passed through the one or more electrically conductive tracks to heat the heating element and the aerosol-forming substrate.

In some embodiments, the heater comprises an inductive heating arrangement. The inductive heating arrangement may comprise an inductor coil and a power supply configured to provide high frequency oscillating current to the inductor coil. As used herein, a high frequency oscillating current means an oscillating current having a frequency of between 500 kHz and 30 MHz. The heater may advantageously comprise a DC/AC inverter for converting a DC current supplied by a DC power supply to the alternating current. The inductor coil may be arranged to generate a high frequency oscillating electromagnetic field on receiving a high frequency oscillating current from the power supply. The inductor coil may be arranged to generate a high frequency oscillating electromagnetic field in the device cavity. In some preferred embodiments, the inductor coil may substantially circumscribe the device cavity. The inductor coil may extend at least partially along the length of the device cavity.

The heater may comprise an inductive heating element. The inductive heating element may be a susceptor element. As used herein, the term 'susceptor element' refers to an element comprising a material that is capable of converting electromagnetic energy into heat. When a susceptor element is located in an alternating electromagnetic field, the susceptor is heated. Heating of the susceptor element may be the result of at least one of hysteresis losses and eddy currents induced in the susceptor, depending on the electrical and magnetic properties of the susceptor material.

A susceptor element may be arranged such that, when the aerosol-generating article is received in the cavity of the aerosol-generating device, the oscillating electromagnetic field generated by the inductor coil induces a current in the susceptor element, causing the susceptor element to heat up. In these embodiments, the aerosol-generating device is preferably capable of generating a fluctuating electromagnetic field having a magnetic field strength (H-field strength) of between 1 and 5 kilo amperes per metre (kA m), preferably between 2 and 3 kA/m, for example about 2.5 kA/m. The electrically-operated aerosol-generating device is preferably capable of generating a fluctuating electromagnetic field having a frequency of between 1 and 30 MHz, for example between 1 and 10 MHz, for example between 5 and 7 MHz.

In some embodiments, a susceptor element is located in the aerosol-generating article. In these embodiments, the susceptor element is preferably located in contact with the aerosol-forming substrate. The susceptor element may be located in the aerosol-forming substrate.

In some embodiments, a susceptor element is located in the aerosol-generating device. In these embodiments, the susceptor element may be located in the cavity. The aerosol-generating device may comprise only one susceptor element. The aerosol-generating device may comprise a plurality of susceptor elements.

In some embodiments, the susceptor element is arranged to heat the outer surface of the aerosol-forming substrate. In some embodiments, the susceptor element is arranged for insertion into an aerosol-forming substrate when the aerosol-forming substrate is received within the cavity.

The susceptor element may comprise any suitable material. The susceptor element may be formed from any material that can be inductively heated to a temperature sufficient to release volatile compounds from the aerosol-forming substrate. Suitable materials for the elongate susceptor element include graphite, molybdenum, silicon carbide, stainless steels, niobium, aluminium, nickel, nickel containing compounds, titanium, and composites of metallic materials. Preferred susceptor elements comprise a metal or carbon. Advantageously the susceptor element may comprise or consist of a ferromagnetic material, for example, ferritic iron, a ferromagnetic alloy, such as ferromagnetic steel or stainless steel, ferromagnetic particles, and ferrite. A suitable susceptor element may be, or comprise, aluminium. The susceptor element preferably comprises more than 5 percent, preferably more than 20 percent, more preferably more than 50 percent or more than 90 percent of ferromagnetic or paramagnetic materials. Preferred elongate susceptor elements may be heated to a temperature in excess of 250 degrees Celsius.

The susceptor element may comprise a non-metallic core with a metal layer disposed on the non-metallic core. For example, the susceptor element may comprise metallic tracks formed on an outer surface of a ceramic core or substrate.

In some embodiments the aerosol-generating system comprises at least one resistive heating element and at least one inductive heating element. In some embodiments the aerosol-generating system comprises a combination of resistive heating elements and inductive heating elements.

The residue detection means may comprise any suitable configuration of the aerosol-generating device, sensor or combination of sensors for detecting aerosol-forming substrate residue in the cavity, on the heater or both in the cavity and on the heater.

In some preferred embodiments, the heater comprises a resistive heating element and the residue detector means comprises a configuration of the controller, such that the controller is configured to: measure the resistance of the heating element; and determine an indication of the amount of aerosol-forming substrate residue on the heating element based on the measured resistance of the heating element. In these preferred embodiments, the residue detection means is specifically configured to sense aerosol-forming substrate residue remaining on the heater after an aerosol-generating article has been removed from the cavity.

Advantageously, configuring the controller to measure the resistance of a resistive heating element of the heater and determine the indication of amount of aerosol-forming substrate residue on the heater based on the measured resistance minimises the number of component parts of the aerosol-generating device.

In some particularly preferred embodiments, there is provided an aerosol-generating device comprising: a housing defining a cavity for receiving an aerosol-generating article comprising an aerosol-forming substrate; an elongate heater arranged for insertion into an aerosol-generating article when an aerosol-generating article is received within the cavity, the heater comprising a resistive heating element; a power supply; and a controller. In these particularly preferred embodiments, the controller may be configured to: control the supply of power from the power supply to the heater; measure the resistance of the resistive heating element; and determine an indication of the amount of aerosol-forming substrate residue on the heater based on the measured resistance of the resistive heating element.

In some embodiments, the determination of the indication of the amount of aerosol-forming substrate residue in the cavity is based on a rate of change of the measurements of the resistance of the resistive heating element. The presence of aerosol-forming substrate residue on the heater may increase the length of time that it takes the temperature of the heater to increase from a first temperature to a second temperature when a given power is supplied to the heater. Since the resistance of the heater is dependent on the temperature of the heater, the rate of change of temperature of the heater may be related to the rate of change of resistance of the heater. As a result, the presence of aerosol-forming substrate residue on the heater may reduce the rate of change of the resistance of the heating element for a given power supplied to the heater. Advantageously, measuring the rate of change of resistance of the heater may provide an indication of the amount of aerosol-forming substrate residue on the heater without requiring additional sensors to be provided in the aerosol-generating device.

The controller may be configured to determine the indication of the amount of aerosol-forming substrate residue in the cavity based on resistance measurements measured after an aerosol-generating article has been removed from the cavity. Advantageously, this ensures that the residue detection means senses aerosol-forming substrate residue in the cavity or on the heater, rather than sensing aerosol-forming substrate in an aerosol-generating article received in the cavity.

In some preferred embodiments, the controller is configured to determine the indication of the amount of aerosol-forming substrate residue in the cavity based on resistance measurements measured after at least a predetermined period of time following termination of a supply of power from the power supply to the heater for heating aerosol-forming substrate in the cavity. Advantageously, waiting for a predetermined period of time after the heater is heated before making the residue determination may provide the controller with a reasonably reliable indication that an aerosol-generating article has been removed from the cavity, without requiring additional sensors to be included in the device.

In some preferred embodiments, the controller is configured to: supply power from the power supply to the heater for heating the aerosol-forming substrate received in the cavity; terminate the supply of power to the heater for heating the aerosol-forming substrate received in the cavity, and, after a predetermined time, measure the resistance of the resistive heating element of the heater; and determine the indication of the amount of aerosol-forming substrate residue on the heater based on the resistance measurements of the resistive heating element.

In some embodiments, the controller is configured to determine a characteristic of a puff of a user on the aerosol-generating device from measurements of the resistance of one or more heating elements of a heater. The controller may be further configured to determine the indication of the amount of aerosol-forming substrate residue in the cavity or on the heater based on the determined characteristic of the puff of a user. The determination of the indication of the amount of aerosol-forming substrate residue in the cavity or on the heater may be based on a change in the determined characteristic of a puff of a user over time.

The performance of an aerosol-generating device, and particularly a resistive heater of an aerosol-generating device, may be changed as a result of residue in the cavity or on the heater. The inventors of the present invention have realised that such a change in performance of an aerosol-generating device may result in a change in the use of the aerosol-generating device by a user. For example, a user may draw more forcefully on an aerosol-generating device having aerosol-forming substrate residue in the cavity or on the heater than the user would on a device having no residue in the cavity or on the heater. This change in use may result from, for example, a change of resistance to draw of the aerosol-generating device or a reduction in the volume of aerosol generated by the device.

The determined characteristic of a puff of a user may be any suitable characteristic. For example, the determined characteristic of a puff of a user may be one or more of the volume of a puff and the duration of a puff.

Characteristics of a puff of a user on the device may be reflected in the temperature, and in turn the resistance, of a resistive heating element of the heater. The flow of air through an aerosol-generating device caused by a puff of a user may cause the temperature of the heater to decrease. The fluctuations in temperature of the heater caused by puffing of a user on the device may be time dependent and distinguishable over other fluctuations in temperature of the heater. Furthermore, changes in the fluctuations in temperature of the heater caused by puffing of a user on the device may be determined over time. The controller may be configured to monitor for changes in the fluctuations in temperature of the heater caused by puffing of a user on the device may be used over time, and determine an indication of the amount of aerosol-forming substrate residue in the cavity or on the heater based on the detected changes.

The residue detection means may comprise one or more residue detectors. A residue detector comprises any detector or sensor that is suitable for sensing residue in the cavity or on the heater. In particular, suitable residue detectors include: volatile organic compound (VOC) detectors; carbon dioxide detectors, optical detectors; acoustic detectors; and capacitive detectors. The one or more residue detectors may be electro-mechanical devices. The one or more residue detectors may be any of: a mechanical device, an optical device, an opto-mechanical device and a microelectromechanical systems (MEMS) based sensor. Preferably, the one or more residue detectors are microelectromechanical systems (MEMS) based sensors. The one or more residue detectors may be arranged at or around the cavity. The one or more residue detectors may be arranged in the cavity. The one or more residue detectors may be arranged on a surface of the cavity. The one or more residue detectors may be arranged on the heater.

In some embodiments, the residue detection means comprises a volatile organic compound detector. The residue detection means may comprise one or more sensors for sensing volatile organic compounds (VOCs). As used herein, the term "organic compound" means any compound containing at least the element carbon and one or more of hydrogen, halogens, oxygen, sulphur, phosphorus, silicon or nitrogen, with the exception of carbon oxides and inorganic carbonates and bicarbonates. As used herein, the term "volatile organic compound (VOC)" means any organic compound having at 293.15 Kelvin (K) a vapour pressure of 0.01 kilopascal (kPa) or more, or having a corresponding volatility under the particular conditions of use. The definitions of "organic compound" and "volatile organic compound" used herein are taken from directive 2010/75/EU of the European parliament and of the council of 24 November 2010 on industrial emissions (integrated pollution prevention and control).

The one or more volatile organic compound sensors may be any suitable type of sensor. For example, suitable VOC sensors include: electrochemical gas sensors, such as chemical field-effect transistors; chemical resistive sensors; metal oxide semiconductor (MOS) sensors; catalytic sensors (pellistors); microcantilever array sensors; surface acoustic wave (SAW) sensors; photoionization detectors (PIDs); and infrared sensors.

Some exemplary suitable VOC sensors which are currently available include: SGP30 and SGPC3 from Sensirion AG; TGS2602 from FIGARO USA., INC; and MiCS-VZ-89TE from SGX Sensortech Limited.

In some embodiments, the residue detection means comprises a gas sensor for detecting the presence of one or more gases in the cavity. Preferably, the one or more gas sensors may be configured to sense carbon dioxide.

The inventors of the present invention have realised that aerosol-forming substrate residue may evolve particular gases. The gases evolved by aerosol-forming substrate residue may be detected by a gas detector and used to provide an indication of the amount of aerosol-forming substrate residue is present in the cavity or on the heater.

The one or more gas sensors may be any suitable type of gas sensor. Suitable types of gas sensor include: electrochemical gas sensors, such as chemical field-effect transistors; chemical resistive sensors; metal oxide semiconductor (MOS) sensors; catalytic sensors (pellistors); microcantilever array sensors; surface acoustic wave (SAW) sensors; photoionization detectors (PIDs); and infrared sensors.

Some exemplary suitable gas sensors which are currently available include: SGP30 and SGPC3 from Sensirion AG; CDM7160-C00 and TGS2602 from FIGARO USA., INC; and MiCS-VZ-89TE from SGX Sensortech Limited.

In some embodiments, the residue detection means comprises an optical detector. The optical detector may comprise a light source. The light source may be arranged to direct light into the cavity. The optical detector may comprise a light sensor. The light sensor may be arranged to receive light from the cavity.

Preferably, the optical detector comprises a light source and a light sensor. The optical detector may further comprise one or more light guides. One or more light guides may be arranged to direct light from the light source to the cavity. One or more light guides may be arranged to direct light from the cavity to the light sensor.

The light source may be any suitable light source. Typically, the light source comprises light emitting diode (LED). Preferably, the light source is configured to emit white light. In other words, preferably the light source is configured to emit a broad band of wavelengths. For example, where the light source comprises an LED, the light source may further comprise a phosphor configured absorb light from the LED and fluoresce light of different, complementary wavelengths. The light source may comprise multiple LEDs configured to emit different wavelengths.

The light sensor may be any suitable light sensor. Typically, the light sensor is a photodetector, such as a photodiode. For example, the light sensor may comprise a PN photodiode, a PIN photodiode, or an avalanche photodiode. The light sensor may comprise a phototransistor.

In embodiments comprising an optical detector, preferably the surfaces defining the cavity are configured to reflect wavelengths of light emitted by the light source. For example, the surfaces of the cavity may be white. The surfaces defining the cavity may be painted or otherwise coated with a reflective coating, such as a white coating. The material forming the surfaces of the cavity may be white.

The inventors of the present invention have realised that spectroscopy may be used to detect the presence of residue in the cavity. In particular, the inventors have realised that diffuse absorption spectroscopy may be used to provide an indication of the amount of aerosol-forming substrate residue present in the cavity. A photodiode may be used to measure the intensity of light within the cavity, which may provide an indication of the amount of residue in the cavity. Aerosol-forming substrate residue may have a specific optical signature, which may be monitored by the controller.

In some embodiment, the light sensor comprises light guides. The light guides may be arranged in any suitable position in the aerosol-generating device. In some embodiments, the heater may comprise the light guides. For example, the light guides may be secured to a mounting of the heater. In some embodiments, the aerosol-generating device comprises an extractor for removing an aerosol-generating article from the cavity, and the extractor may comprise the one or more light guides. In these embodiments, the one or more light guides may be arranged to align with one or more of the light source and the light sensor when the extractor is arranged in position on the aerosol-generating device.

In some embodiments, the residue detection means comprises an acoustic detector.

The cavity may have a particular acoustic resonant frequency. Aerosol-forming substrate residue in the cavity may change the mass and shape of the cavity, changing the resonant frequency of the cavity. The heater may have a particular acoustic resonant frequency. Aerosol-forming substrate residue on the heater may change the mass and shape of the heater, changing the resonant frequency of the heater.

The inventors of the present invention have realised that an acoustic detector may be used to detect a change in the acoustic resonant frequency of one or more of the cavity and the heater. A change in the acoustic resonant frequency of the cavity may provide an indication of the amount of aerosol-forming substrate residue in the cavity. A change in the resonant frequency of the heater may provide an indication of the amount of aerosol-forming substrate residue on the heater.

The acoustic detector may be configured to generate vibrations (i.e. a mechanical wave or sound wave). The frequency of the generated vibrations may be variable. The acoustic detector may comprise an output transducer. The output transducer may convert an electrical signal into vibrations. In particular, the output transducer may be a loudspeaker. Typically, the loudspeaker is an electroacoustic transducer. Preferably, the oscillator is a crystal loudspeaker, such as a piezoelectric speaker.

The acoustic detector may be configured to receive a mechanical wave. An acoustic detector may comprise an input transducer. The input transducer may convert vibrations into an electrical signal. The input transducer may be a piezoelectric transducer.

Preferably, the acoustic detector is a piezoelectric acoustic wave sensor.

The acoustic detector may be arranged on a surface of the cavity. Preferably, the acoustic detector is arranged on the heater. Preferably the heater is an elongate heater configured for insertion into an aerosol-forming substrate and the acoustic detector is arranged on the heater.

In some embodiments, the residue detection means comprises a capacitive sensor. The inventors of the present invention have realised that aerosol-forming substrate residue may have dielectric properties, which may be sensed by a capacitive sensor.

Preferably, the capacitive sensor is arranged at or around the cavity. The capacitive sensor may extend over at least a portion of a base of the cavity. The capacitive sensor may extend over at least a portion of a side wall of the cavity.

The capacitive sensor may comprise at least two electrodes. Preferably, the capacitive sensor comprises two interdigitated electrodes. In embodiments comprising a capacitive sensor having two interdigitated electrodes, each of the interdigitated electrodes comprises a plurality of protrusions electrically connected together by a main track and spaced apart to provide spaces between adjacent protrusions. The protrusions and spaces of each electrode may be arranged in a regular or periodic arrangement. Typically, two interdigitated electrodes are arranged such that the protrusions of each of the electrodes extend into the spaces between the protrusions of the other electrode.

The protrusions of each interdigitated electrode may be substantially identical. The spaces between the protrusions of each interdigitated electrode may be substantially identical. The width of the spaces between adjacent protrusions of an electrode may be referred to as the spatial wavelength A or band gap of the electrode.

An example of a suitable pair of interdigitated electrodes may be the DRP-G- IDEPT10 sensor from DropSens^{™}.

One of the electrodes of a pair of interdigitated electrodes may be configured as a driving electrode. The driving electrode may be supplied with an oscillating voltage. The other electrode may be configured as a sensing electrode. The sensing electrode may sense the electric field generated by the driving electrode. The electric field generated by the driving electrode comprises an electric fringing field due to the stray electric fields at the edges of the fingers of the driving electrode. The electric fringing fields comprise a component that extends out of the surface on which the interdigitated electrodes are arranged, in a direction substantially normal to the surface. As such, the electric fringing field generated by the driving electrode extends into the material arranged above or adjacent to the electrodes.

Electrical properties of a material arranged above or adjacent to a pair of interdigitated electrodes may affect the electric fringing field generated by the driving electrode. For example, the dielectric properties of a material arranged above or adjacent to a pair of interdigitated electrodes may affect the generated electric fringing field. Thus, the sensing electrode of the pair of interdigitated electrodes may sense changes in the electrical properties the material arranged above or adjacent to the pair of interdigitated electrodes.

Where aerosol-forming substrate residue is arranged above or adjacent the electrodes, the electric fringing field may extend into the aerosol-forming substrate residue.

In some embodiments, the residue detection means comprises a puff detector. A puff detector may comprise any suitable sensor capable of determining a characteristic of a puff on the aerosol-generating device. For example, the puff detector may comprise an airflow sensor, such as a pressure sensor. The puff detector may be arranged in an airflow pathway of the device and configured to sense a characteristic of a puff of a user on the aerosol-generating device. The characteristic of a puff of a user may be the volume or duration of a puff. The controller may be configured to determine changes in the characteristic of a puff over time, typically over a plurality of puffs, such as ten or twenty puffs. The controller may be configured to determine whether a change in the characteristic puff over time provides an indication of an amount of aerosol-forming substrate residue in the cavity. The controller may be configured to determine whether a change in the characteristic puff over time provides an indication of an amount of aerosol-forming substrate residue on the heater.

In some embodiments, the controller is configured to determine the indication of the amount of residue based on measurements from the residue detection means when an aerosol-forming substrate is received in the cavity and power is supplied to the heater to heat the aerosol-forming substrate. In particular, in embodiments in which the residue detection means determines the indication of the amount of residue based on a characteristic of a puff of a user on the device, the controller is configured to determine an indication of the amount of residue based on measurements from the residue detection means when an aerosol-forming substrate is received in the cavity and power is supplied to the heater to heat the aerosol-forming substrate.

In other embodiments, it is preferable that the controller is configured to determine the indication of the amount of residue when an aerosol-forming substrate is not received in the cavity. In particular, in embodiments comprising one or more residue detectors, it is preferable that the controller is configured to determine the indication of the amount of residue when an aerosol-forming substrate is not received in the cavity

In some embodiments, the aerosol-generating device may comprise a button, a switch or another type of user input for initiating the determination of residue in the cavity or on the heater. In these embodiments, a user is responsible for determining when an aerosol-forming substrate is not received in the cavity. When the user input is actuated by a user, the controller is configured to determine the indication of the amount of residue.

In some embodiments, the controller is configured to determine the indication of the amount of residue based on signals received from the residue detection means after an aerosol-generating article has been removed from the cavity. In these embodiments, the controller is configured to determine that an aerosol-generating article has been removed from the cavity. Advantageously, this ensures that the residue detection means senses aerosol-forming substrate residue in the cavity or on the heater, rather than sensing aerosol-forming substrate in an aerosol-generating article received in the cavity.

The controller may be configured to determine that an aerosol-generating article has been removed from the cavity in any suitable manner.

In some preferred embodiments, the controller is configured to determine the indication of the amount of aerosol-forming substrate residue in the cavity based on signals received from the residue detection means after termination of a supply of power from the power supply to the heater for heating aerosol-forming substrate in the cavity. In some particularly preferred embodiments, the controller is configured to determine the indication of the amount of aerosol-forming substrate residue in the cavity based on signals received from the residue detection means after at least a predetermined period of time following termination of a supply of power from the power supply to the heater for heating aerosol-forming substrate in the cavity. Advantageously, waiting for a predetermined period of time after heating the heater before making the residue determination may provide the controller with a reasonably reliable indication that an aerosol-generating article has been removed from the cavity, without requiring additional sensors to be included in the device.

In some preferred embodiments, the aerosol-generating device further comprises aerosol-generating article detection means configured to detect the presence of an aerosol-generating article in the cavity. The aerosol-generating article detection means may comprise one or more suitable sensors. For example, the aerosol-generating article detection means may comprise one or more proximity sensors. The proximity sensor may be, for example, an optical sensor, a capacitive sensor or an ultrasonic detector.

The controller may be configured to receive signals from the aerosol-generating article detection means. The controller may be further configured to determine the indication of the amount of aerosol-forming substrate residue in the cavity based on signals received from the residue detection means when the signals from the aerosol-generating article detection means indicate that an aerosol-generating article is not received in the cavity.

The aerosol-generating device comprises a controller. The controller may comprise a microprocessor, which may be a programmable microprocessor, a microcontroller, or an application specific integrated chip (ASIC) or other electronic circuitry capable of providing control. The controller may comprise further electronic components. In some embodiments, the controller may comprise the residue detection means.

The aerosol-generating device comprises a power supply. The power supply may be a DC power supply. In preferred embodiments, the power supply is a battery. The power supply may be a nickel-metal hydride battery, a nickel cadmium battery, or a lithium based battery, for example a lithium-cobalt, a lithium-iron-phosphate or a lithium-polymer battery. However, in some embodiments the power supply may be another form of charge storage device, such as a capacitor. The power supply may require recharging and may have a capacity that allows for the storage of enough energy for one or more user operations, for example one or more aerosol-generating experiences. For example, the power supply may have sufficient capacity to allow for continuous heating of an aerosol-forming substrate for a period of around six minutes, corresponding to the typical time taken to smoke a conventional cigarette, or for a period that is a multiple of six minutes. In another example, the power supply may have sufficient capacity to allow for a predetermined number of puffs or discrete activations of the heater.

Preferably, the aerosol-generating device comprises a residue indicator for indicating the determined amount of residue in the cavity or on the heater to a user. The residue indicator may comprise a visual indicator, such as a display or one or more lights. The residue indicator may comprise an audible indicator, such as a loudspeaker or buzzer. Typically, the residue indicator is connected to the controller. The controller may be configured to send a signal to the residue indicator to indicate to a user the determined amount of residue in the cavity or on the heater. In some embodiments, the controller is configured to send a signal to the residue indicator when the determined amount of residue in the cavity or on the heater exceeds a threshold. Advantageously, providing the aerosol-generating device with one or more residue indicators may enable the controller of the aerosol-generating device to alert a user when an unacceptable amount of aerosol-forming substrate residue in the cavity or on the heater has been detected.

Preferably, the aerosol-generating device comprises a housing. Preferably, the housing at least partially defines the cavity for receiving an aerosol-forming substrate. The housing may have a proximal end and a distal end. The chamber may be arranged at the proximal end of the device.

The housing may be elongate. Preferably, the housing is cylindrical in shape. The housing may comprise any suitable material or combination of materials. Examples of suitable materials include metals, alloys, plastics or composite materials containing one or more of those materials, or thermoplastics that are suitable for food or pharmaceutical applications, for example polypropylene, polyetheretherketone (PEEK) and polyethylene. Preferably, the material is light and non-brittle.

Preferably the aerosol-generating device is portable. The aerosol-generating device may have a length of between approximately 70 millimetres and approximately 120 millimetres. The aerosol-generating device may be a handheld device. In other words, the aerosol-generating device may be sized and shaped to be held in the hand of a user.

The aerosol-generating device may comprise at least one air inlet in fluid communication with the cavity. In embodiments in which the aerosol-generating device comprises a housing, preferably the housing at least partially defines the at least one air inlet. Preferably, the at least one air inlet is in fluid communication with a distal end of the cavity. In embodiments in which the at least one heater is an elongate at least one heater positioned within the cavity, preferably the elongate at least one heater extends into the cavity from the distal end of the cavity.

Preferably, the aerosol-generating device comprises a heater indicator for indicating when the at least one heater is activated. The heater indicator may comprise a light, activated when the at least one heater is activated.

The aerosol-generating device may comprise at least one of an external plug or socket and at least one external electrical contact allowing the aerosol-generating device to be connected to another electrical device, such as a charging device. For example, the aerosol-generating device may comprise a USB plug or a USB socket to allow connection of the aerosol-generating device to another USB enabled device. For example, the USB plug or socket may allow connection of the aerosol-generating device to a USB charging device to charge a rechargeable power supply within the aerosol-generating device. The USB plug or socket may support the transfer of data to or from, or both to and from, the aerosol-generating device. Additionally, or alternatively, the aerosol-generating device may be connected to a computer to transfer data to the device, such as new heating profiles for new aerosol-generating articles.

According to a second aspect of the present invention, there is provided an aerosol-generating system comprising: an aerosol-generating device and a case for receiving the aerosol-generating device. The aerosol-generating device comprises: a device cavity for receiving an aerosol-generating article comprising an aerosol-forming substrate; a heater arranged to heat aerosol-forming substrate received in the device cavity; a power supply; and a device controller configured to control the supply of power from the power supply to the heater to heat aerosol-forming substrate received in the device cavity. The case comprises: a case cavity for receiving the aerosol-generating device; a residue detector arranged to sense aerosol-forming substrate residue in the device cavity or on the heater when the aerosol-generating device is received in the case cavity; and a case controller. The case controller is configured to: receive signals from the residue detector indicative of the amount of aerosol-forming substrate residue in the device cavity or on the heater; and determine an indication of the amount of aerosol-forming substrate residue in the device cavity or on the heater based on signals received from the residue detector.

According to a third aspect not in accordance with the present invention to the extent that the aspect is not in accordance with the appended claims, there is provided a case for receiving an aerosol-generating device. The case comprises: a case cavity for receiving an aerosol-generating device; a residue detector arranged to sense aerosol-forming substrate residue in the device; and a case controller. The case controller is configured to: receive signals from the residue detector indicative of the amount of aerosol-forming substrate residue in the device; and determine an indication of the amount of aerosol-forming substrate residue in the cavity based on signals received from the residue detector.

Advantageously, providing a case for receiving an aerosol-generating device, and providing the case with an aerosol-forming substrate residue detector, enables the aerosol-generating device to remain small and light, without the additional components of the residue detector, while also providing the system with the benefits of residue detection described above in relation to the first aspect of the invention.

Advantageously, the size of the case is generally larger than the size of the aerosol-generating device, which may enable a larger residue detector to be provided in the case, rather than in the aerosol-generating device.

In some particularly preferred embodiments, both the aerosol-generating device and the charging unit may comprise residue detection means. The aerosol-generating device may comprise a first residue detection means and the charging unit may comprise a second residue detection means.

Features of the case described herein may be equally applicable to the case of the aerosol-generating system according to the second aspect of the invention and the case of the third aspect.

The case comprises a case cavity for receiving the aerosol-generating device. The case may be configured such that an aerosol-generating device may only be received in case cavity when an aerosol-generating article is not received in the aerosol-generating device. For example, the case cavity may be sized to receive an aerosol-generating device, but not an aerosol-generating device including an aerosol-generating article received in the device. Advantageously in these embodiments, providing the residue detector in the case, rather than the aerosol-generating device, may ensure that measurements from the residue detector are only taken when the cavity of the aerosol-generating device does not contain an aerosol-generating article.

Preferably the case comprises a case housing. The case housing may at least partially define the case cavity for receiving the aerosol-generating device. The case housing may substantially surround or enclose the aerosol-generating device when the aerosol-generating device is received in the case cavity.

The case cavity may be an open cavity, having at least one end open for receiving the aerosol-generating device. The case housing may comprise a plurality of parts. The case housing may comprise a first part and a second part. The second part may be movable relative to the first part. The second part may be rotatable or slidable relative to the first part. The second part may be removable from the first part. The first part and second part may be movable between an open position and a closed position. In the open position, the case cavity may be open for receiving the aerosol-generating device. In the closed position, the case cavity may be closed for substantially surrounding or enclosing the aerosol-generating device. The first part may be a main body substantially defining the case cavity and the second part may be a lid. The lid may be movable relative to the main body for opening and closing the case cavity.

The case housing may be formed from any of the materials listed above for the aerosol-generating device housing. The case housing may be formed from the same material as the device housing. Preferably, the case is portable. The case may be a handheld case. In other words, the case may be sized and shaped to be held in the hand of a user.

The residue detector of the case may be any suitable residue detector, as described above in relation to the first aspect of the present invention. In particular, suitable residue detectors include: volatile organic compound (VOC) detectors; gas detectors, such as carbon dioxide detectors, optical detectors; acoustic detectors; and capacitive detectors.

The one or more residue detectors may be arranged at any suitable position in the case. The one or more residue detectors may be arranged at a position at or around the cavity of the aerosol-generating device when the aerosol-generating device is received in the case cavity. Where the case comprises a case housing having a first part and a second part movable relative to the first part, the case controller may be arranged in the first part and one or more residue detectors may be arranged in the second part. Where the case comprises a case housing having a main body and a lid, one or more residue detectors may be arranged on the lid. In these embodiments, the case controller may be arranged in the main body of the case housing. The case controller and the one or more residue detectors arranged on the lid may be connected by a flexible circuit. Advantageously, arranging one or more residue detectors on a lid of the case may enable the one or more residue detectors to be moved close to or into the device cavity of the aerosol-generating device when the aerosol-generating device is received in the case cavity and the lid is moved from the open position to the closed position.

Where the residue detector comprises a VOC detector, carbon dioxide detector, other gas detectors or an optical detector, the detector may be arranged in the device cavity or outside the device cavity when the aerosol-generating device is received in the case cavity. Where the residue detector comprises an acoustic detector or a capacitive detector, the residue detector may be arranged in the device cavity. In particular, where the residue detector comprises an acoustic detector, the acoustic detector may be arranged in contact with a surface of the device cavity or heater, or at least in contact with residue on a surface of the device cavity or heater.

In some embodiments, the case comprises a case housing having a protrusion. The protrusion may be arranged to be received in the device cavity when the aerosol-generating device is received in the case cavity. One or more residue detectors may be arranged on the protrusion, such that the one or more residue detectors are positioned in the device cavity when the aerosol-generating device is received in the case cavity. Where the case comprises a housing having a first part and a second part movable relative to the first part, the second part may comprise the protrusion, and the protrusion may be arranged to be received in the device cavity when the aerosol-generating device is received in the case cavity and the first and second parts are arranged in the closed position.

Where the residue detector comprises an optical detector, the case may comprise a light source and a light sensor. The light source may be arranged to direct light into the device cavity of an aerosol-generating device received in the case cavity. The light sensor may be arranged to receive light from the device cavity of an aerosol-generating device received in the case cavity. Preferably, the optical detector also comprises light guides arranged to direct light between the optical detector and the device cavity of an aerosol-generating device received in the case cavity. In these embodiments, an aerosol-generating device configured to be received in the case cavity may comprise a window in the portion of the device housing defining the device cavity. The window in the portion of the device housing defining the device cavity may enable light from the optical detector of the case to pass into the device cavity, and may enable light from the cavity to exit the device cavity and be received by the optical detector. The window may be an aperture in the device housing. The window may comprise a material transparent to light from the optical detector. The window may be a light guide.

In some embodiments, the case may comprise a button, a switch or another type of user input for initiating the determination of residue in the device cavity or on the heater of an aerosol-generating device received in the case cavity. When the user input is actuated by a user, the case controller is configured to determine the indication of the amount of residue.

In some embodiments, the case may be configured to initiate the determination of residue in the device cavity or on the heater of an aerosol-generating device received in the case cavity when a lid of the case is closed. In some embodiments, the case may be configured to initiate the determination of residue in the device cavity or on the heater of an aerosol-generating device received in the case cavity a predetermined period of time after a lid of the case is closed. For example, the predetermined period of time may be between about 10 seconds and about 30 seconds after a lid of the case is closed.

Preferably, the case comprises a residue indicator for indicating the determined amount of residue in the cavity or on the heater to a user. The residue indicator may comprise a visual indicator, such as a display or one or more lights. The residue indicator may comprise an audible indicator, such as a loudspeaker or buzzer. Typically, the residue indicator is connected to the case controller. The case controller may be configured to send a signal to the residue indicator to indicate to a user the determined amount of residue on the aerosol-generating device. In some embodiments, the case controller is configured to send a signal to the residue indicator when the determined amount of residue in the cavity or on the heater exceeds a threshold. Advantageously, providing the case with one or more residue indicators may enable the case controller to alert a user when an unacceptable amount of aerosol-forming substrate on the aerosol-generating device has been detected.

In some embodiments, the case controller is further configured to send a residue signal to the device controller when the determined indication of the amount of aerosol-forming substrate residue on the aerosol-generating device exceeds a threshold. In these embodiments, the device controller may be configured to receive residue signals from the case controller, and prevent power from being supplied from the power supply to the heater to heat aerosol-forming substrate in the cavity when a residue signal is received.

The case controller may be further configured to send a no residue signal to the device controller when the determined indication of the amount of aerosol-forming substrate residue on the aerosol-generating device is equal to or below the threshold. In these embodiments, the device controller may be configured to receive no residue signals from the case controller, and enable power to be supplied from the device power supply to the heater to heat aerosol-forming substrate in the cavity when a no residue signal is received.

In some embodiments, the case controller is configured to send a cleaning signal to the device controller when the determined indication of the amount of aerosol-forming substrate residue in the cavity or on the heater exceeds a threshold. In these embodiments, the device controller may be configured to: supply power to the heater to raise the temperature of the heater to a first temperature for heating the aerosol-forming substrate received in the cavity sufficiently for an aerosol to be formed, receive cleaning signals from the controller of the case, and supply power to the heater to raise the temperature of the heater to a second temperature, higher than the first temperature, to thermally liberate organic materials adhered to or deposited in the cavity when a cleaning signal is received from the case controller.

Configuring the aerosol-generating system such that the case controller initiates a pyrolytic cleaning cycle of the aerosol-generating device may ensure that the aerosol-generating device is received in the case when a cleaning cycle is performed. Advantageously, the case may provide additional protection to a user from the heater of the aerosol-generating device during a cleaning cycle, when the heater is heated to the second temperature.

Where the case comprises a case housing having a first part and a second part movable relative to the first part, the case controller may be configured to send a cleaning signal to an aerosol-generating device received in the case cavity when the first part and second part are arranged in the closed position. Advantageously, this may ensure that the case housing substantially surrounds or encloses the aerosol-generating device when a pyrolytic cleaning cycle is performed.

The case preferably comprises a power supply. The case power supply is typically housed in the case housing. Preferably the case power supply is a DC power supply. Typically, the case power supply is a battery. The case power supply may be a nickel-metal hydride battery, a nickel cadmium battery, or a lithium based battery, for example a lithium-cobalt, a lithium-iron-phosphate or a lithium-polymer battery. However, in some embodiments the case power supply may be another form of charge storage device, such as a capacitor. The case power supply may require recharging. The case power supply may have a capacity that allows for the storage of enough energy to charge the power supply of the aerosol-generating device a plurality of times, for example, 10 or 20 times.

The case may further comprise power transfer circuitry housed in the housing. The power transfer circuitry may be arranged to transfer power from the case power supply to the device power supply when the aerosol-generating device is received in the case cavity.

Where the aerosol-generating device comprises residue detection means, the device controller may be configured to communicate the determined indication of the amount of residue over a communications link with one or more of the case, an external device and an external server. Where the case comprises residue detection means, the case controller may be configured to communicate the determined indication of the amount of residue over a communications link with one or more of the aerosol-generating device, an external device and an external server. The external device may be any suitable device, such as a personal computer, laptop, tablet computer or smartphone. The external server may be a remote server. In some embodiments, the system may be configured to communicate with a Cloud server over the internet. The communications link may be suitable for flow of data from the device controller to one or more of the case, an external device or an external server. The communications link may be suitable for flow of data from the case to one or more of the aerosol-generating device, an external device or an external server. Preferably, the communications link is suitable for bi-directional flow of data between the aerosol-generating device and the case. The communications link may be suitable for bi-directional flow of data between one or more of the aerosol-generating device, the case and an external device or an external server.

In some embodiments, the communications link is a wired communication link. In some embodiments, the communications link is a wireless communication link. Preferably, the communications link operates under an interface standard. An interface standard is a standard that describes one or more functional characteristics, such as code conversion, line assignments, or protocol compliance, or physical characteristics, such as electrical, mechanical, or optical characteristics, necessary to allow the exchange of information between two or more systems or pieces of equipment. Examples of suitable interface standards for the communications link include, but are not limited to, the Recommended Standard 232 (RS-232) family of standards; Universal Serial Bus (USB); Bluetooth^{®}; FireWire (a brand name of Apple, Inc. for their IEEE 1394 interface), IrDA (infrared Data Association - a communications standard for the short-range exchange of data by Infrared light); ZigBee (a specification based on the IEEE 802.15.4 standard for wireless personal area networks) and other Wi-Fi standards.

At least one of the device controller and the case controller may include a communication interface such as, for example, at least a telemetry circuit and an antenna. More specifically, data and commands may be transmitted and received during uplink or downlink telemetry between one or more of the device controller, the case controller and an external device or an external server using the communication interface. In at least one embodiment, the communication interface is a wireless interface using one or more wireless (e.g., radio frequency) data transmission protocols such as, e.g., Bluetooth^{®}, WI-FI, any protocol in the ultra-high frequency (UHF) band, any protocol in the super high frequency (SHF) band, low frequencies, etc.

In some embodiments, the device controller comprises a communication interface. In some embodiments, the case controller comprises a communication interface. In some embodiments, device controller comprises a first communication interface and the case controller comprises a second communication interface.

In some preferred embodiments, a controller of the aerosol-generating system, such as the device controller or the case controller, may be configured to communicate the determined indication of the amount of residue to an external device, such as a user's smartphone, through a short range communications protocol, such as Bluetooth^{®}, and the external device may be configured to communicate the determined indication of the amount of residue to an external server, such as a cloud server, over a network such as the Internet.

It will be appreciated that the aerosol-generating device of the first aspect of the present invention may comprise any of the features described above in relation to the aerosol-generating system of the second aspect of the present invention. For example, the aerosol-generating device of the first aspect may comprise a controller comprising a communication interface.

According to a fourth aspect of the present invention, there is provided a residue detector device for detecting aerosol-forming substrate residue in an aerosol-generating device. The residue detector device comprises: a detector cavity for receiving at least a portion of an aerosol-generating device; and a residue detector arranged to sense aerosol-forming substrate residue in a portion of an aerosol-generating device received in the detector cavity.

The residue detector of the residue detector device may be any suitable residue detector, as described above in relation to the first, second and third aspects, In particular, suitable residue detectors include: volatile organic compound (VOC) detectors; carbon dioxide detectors, optical detectors; acoustic detectors; and capacitive detectors.

The detector cavity may be any suitable shape or size. For example, in some embodiments comprising an optical detector, the cavity may have a substantially hemispherical shape for reflecting light in all directions such that light may be directed over as many surfaces of an aerosol-generating device cavity and heater as possible. For example, in some embodiments comprising a gas detector, such as a carbon dioxide detector, the detector cavity may have a substantially cylindrical shape that is close to the shape and size of the proximal end of the aerosol-generating device, such that the proximal end of the aerosol-generating device may be closely received in the detector cavity.

The one or more residue detectors of the residue detector device may be arranged in any suitable location on the detector device. Preferably, the one or more residue detectors are arranged at or around the detector cavity.

In some embodiments, the residue detector device comprises a protrusion in the detector cavity. The protrusion in the detector cavity may be configured to be received in a cavity of an aerosol-generating device when a portion of the aerosol-generating device is received in the detector cavity. One or more of the residue detectors of the residue detector device may be arranged on the protrusion, such that the one or more residue detectors are received in the cavity of an aerosol-generating device when a portion of the aerosol-generating device is received in the detector cavity.

Preferably, the residue detector device comprises a housing defining the detector cavity. Preferably the detector controller is housing in the detector housing. Preferably, the residue detector device further comprises a power supply. Preferably the detector power supply is housed in the detector housing.

In some particularly preferred embodiments, the residue detector device comprises an indicator for indicating that the cavity or heater of the aerosol-generating device requires cleaning. The indicator may be a visual indicator, such as one or more LEDs, or an audible indicator, such as a buzzer. The controller may be configured to send a signal to the indicator when the determined indication of the amount of residue in the cavity or on the heater of the aerosol-generating device exceeds a predetermined threshold. Sending a signal to the indicator may activate the indicator, alerting a user that the aerosol-generating device requires cleaning.

The residue detector device may be similar in many aspects to the case of the second and third aspects.

However, typically the residue detector device is not configured to surround or enclose an aerosol-generating device. Preferably, the detector cavity of the residue detector device is configured to receive a proximal portion of an aerosol-generating device, comprising the device cavity and heater.

In some preferred embodiments, the residue detector device is part of a cleaning system for an aerosol-generating device. The cleaning system may comprise a cleaning tool, such as a brush. The cleaning tool may be configured to clean aerosol-forming substrate residue from the cavity and heater of an aerosol-generating device. The cleaning system may comprise two parts, a first part comprising the residue detector device, and a second part comprising a cleaning tool. The first and second parts may be removably securable together.

According to a fifth aspect not in accordance with the present invention to the extent that the aspect is not in accordance with the appended claims, there is provided a method of operating an aerosol-generating device comprising a cavity for receiving an aerosol-forming substrate, a power supply, a heater and residue detection means, the method comprising: supplying power from the power supply to the heater for heating aerosol-forming substrate received in a cavity; terminating the supply of power to the heater; measuring the amount of residue in the cavity or on the heater using the residue detection means a predetermined amount of time after termination of the supply of power to the heater; and determining an indication of the amount of aerosol-forming substrate residue in the cavity or on the heater based on the measurements from the residue detection means.

In some embodiments, the method further comprises comparing the determined indication of the amount of aerosol-forming substrate residue in the cavity or on the heater to a predetermined threshold. In some embodiments, the method further comprises sending an indication to a user when the determined indication of the amount of aerosol-forming substrate residue in the cavity or on the heater exceeds a predetermined threshold. The indication sent from the controller to the user may comprise, for example, illuminating a light source, displaying a message or other information on a display or sounding a buzzer or loudspeaker.

In some embodiments, the method further comprises supplying power to the heater to raise the temperature of the heater to thermally liberate organic materials adhered to or deposited in the cavity or on the heater when the determined indication of the amount of aerosol-forming substrate residue in the cavity or on the heater exceeds a predetermined threshold.

In some embodiments, the method further comprises preventing power from being supplied to the heater of the aerosol-generating device when the determined indication of the amount of aerosol-forming substrate residue in the cavity or on the heater exceeds a predetermined threshold.

It will be appreciated that features described in relation to one aspect may also be equally applicable to any other aspect.

In particular, the features of the residue detectors described in relation to an aerosol-generating device may also be applicable to a case for an aerosol-generating device, and vice versa.

Embodiments of the invention will now be described, by way of example only, with reference to the accompanying drawings, in which:
Figure 1 shows a schematic illustration of an aerosol-generating device in accordance with an embodiment of the present invention;
Figure 2 shows an exemplary relationship between resistance of a heating element of the aerosol-generating device of Figure 1 over time with different amounts of aerosol-forming substrate disposed on a surface of the heater;
Figure 3 shows a schematic illustration of an aerosol-generating device in accordance with another embodiment of the present invention;
Figure 4 shows a schematic illustration of a capacitive residue detector of the aerosol-generating device of Figure 3;
Figure 5 shows a schematic illustration of a heater and optical residue detector of an aerosol-generating device according to another embodiment of the present invention;
Figure 6 shows a schematic illustration of a heater assembly having light guides according to another embodiment of the present invention;
Figure 7 shows a schematic illustration of an aerosol-generating system comprising a case and an aerosol-generating device according to another embodiment of the present invention;
Figure 8 shows a schematic illustration of a portion of an aerosol-generating system comprising a case and an aerosol-generating device according to another embodiment of the present invention; and
Figure 9 shows a schematic illustration of a residue detector device in cooperation with an aerosol-generating device according to another embodiment of the present invention.

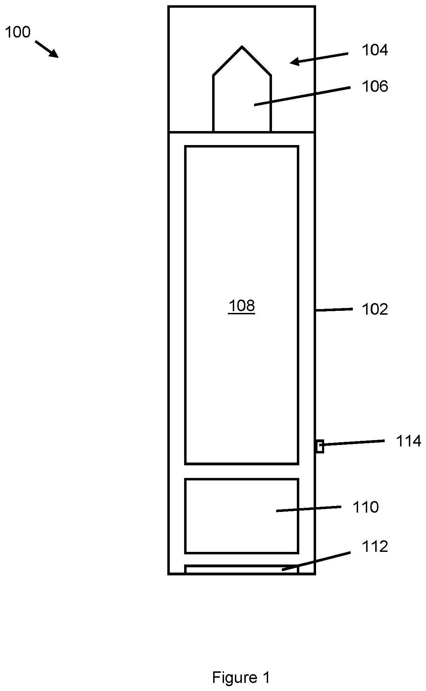

Figure 1 shows a schematic illustration of an aerosol-generating device 100 according to a first embodiment of the present invention. The aerosol-generating device 100 shown in Figure 1 is a device configured to receive an aerosol-generating article (not shown) comprising a solid aerosol-forming substrate and a filter wrapped together in the form of a rod like a conventional cigarette. The aerosol-generating device 100 is a portable device that is configured to be held in the hand of a user. The aerosol-generating device 100 comprises a housing 102, which is generally cylindrical, having a length of about 90 mm, a diameter of about 14 mm.

An open, cylindrical cavity 104 is provided at a proximal end of the housing 102 of the device 100 for receiving aerosol-forming substrate of an aerosol-generating article. An elongate heater 106, in the form of blade, extends into the cavity 104 for penetrating into the aerosol-forming substrate of an aerosol-generating article received in the cavity 104. The heater 106 comprises a plurality of resistive heating elements or tracks disposed on an electrically insulating Polyimide substrate.

A power supply 108, in the form of a lithium-ion battery with a capacity of about 120 milliampere-hours, is housed within the housing 102.

A controller 110 is also housed within the housing 102. The controller 110 comprises a microprocessor (not shown). The controller 110 is connected to the heater 106 and the power supply 108, and the controller 110 is configured to control the supply of power from the power supply 108 to the heater 106.

In this embodiment, the controller 110 is configured to measure the resistance of one of the electrically resistive heating elements of the heater 106. The electrical resistance of the electrically resistive heating element provides an indication of the temperature of the heater 106. The controller 110 is configured to control the temperature of the heater 106 by controlling the power supplied from the power supply 108 to the heater 106 based on measurements of resistance of the electrically resistive heating element.

An electrical connector 112 is arranged at a distal end face of the housing 102, opposite the cavity 104. The power supply 108 and the controller 110 are connected to the electrical connector 112.

In accordance with the present invention, the aerosol-generating device 100 comprises residue detection means. In this embodiment, the residue detection means comprise the heater 106 and a configuration of the controller 110. The controller is configured to measure the electrical resistance of the electrically resistive heating element of the heater 106 a predetermined period of time after termination of a supply of power to the heater 106 for heating aerosol-forming substrate. In this device, the predetermined period of time is 30 seconds, which has been found to provide a reasonable length of time approximate to the time taken for a user to remove an aerosol-generating article from a device after use, and for lingering aerosol generated during use to disperse from the cavity.

After the predetermined period of time, the controller 110 is configured to supply a predetermined power to the heater 106 to raise the temperature of the heater by a nominal amount. The controller 110 is further configured to measure the resistance of the electrically resistive heating element and determine the rate of change of the resistance of the electrically resistive heating element as the temperature of the heater 106 is raised by the nominal amount. In this embodiment, the controller 110 is configured to monitor the rate of change of resistance of the heating element and compare the measured rate of change to a threshold. The threshold is a predetermined threshold that is stored in a memory (not shown) of the controller 110. If the rate of change of resistance is below the threshold, this provides an indication that an unacceptable amount of aerosol-forming substrate residue is present on the heater, and is negatively affecting the performance of the heater.

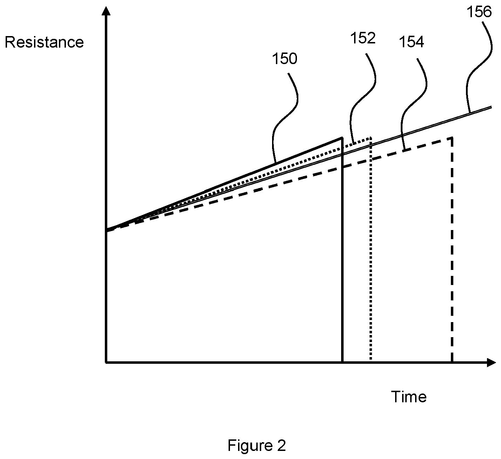

Figure 2 shows an exemplary graph depicting exemplary changes in resistance of the electrically resistive heating element of the heater 106 over time for a given power supplied to the heater 106 when three different amounts of aerosol-forming substrate residue are provided on a surface of the heater 106. As shown in Figure 2, the highest rate of change of resistance 150 of the heating element is measured when no aerosol-forming substrate residue is provided on a surface of the heater 106. A slightly lower rate of change of resistance 152 of the heating element is measured when a thin covering of aerosol-forming substrate residue is provided on a surface of the heater 106. The lowest rate of change of resistance 154 of the heating element is measured when a thick covering of aerosol-forming substrate residue is provided on a surface of the heater 106. A predetermined threshold 156 for the rate of change or resistance of the heating element is also shown in Figure 2. The predetermined threshold delimits the lowest acceptable rate of change of resistance, which indicates the largest amount of aerosol-forming substrate residue that is acceptable on the heater.

Referring back to Figure 1, the aerosol-generating device 100 further comprises a residue indicator 114, in the form of an LED arranged on an outer surface of the housing 102. In this embodiment, the controller 110 is configured to illuminate the LED 114 when the measured rate of change of resistance of the heating element is determined to be below the threshold value 156. The residue indicator LED 114 provides an indication to a user that the amount of aerosol-forming substrate residue in the cavity and on the heater is above an acceptable level, and the heater 106 requires cleaning.

It will be appreciated that in some embodiments, the controller may be configured to prevent power from being supplied to the heater to heat aerosol-forming substrate when the measured rate of change of resistance of the heating element is determined to be below the threshold value.

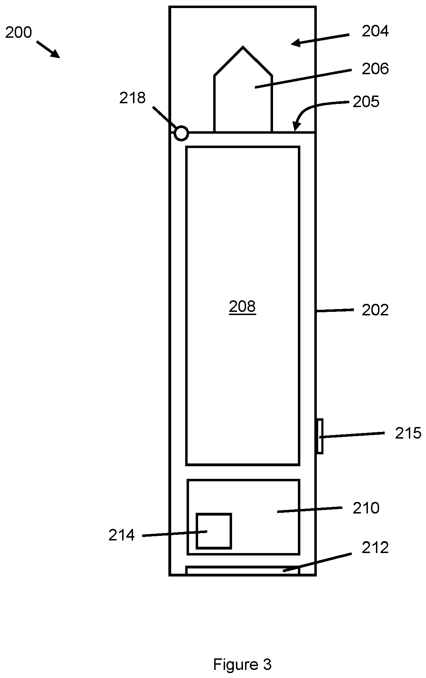

Figure 3 shows a schematic illustration of an aerosol-generating device 200 according to a second embodiment of the present invention. The aerosol-generating device 200 is substantially similar to the aerosol-generating device 100 shown in Figure 1, and like reference numerals are used to refer to like features. The aerosol-generating device 200 shown in Figure 3 is configured to receive an aerosol-generating article (not shown) comprising a solid aerosol-forming substrate and a filter wrapped together in the form of a rod like a conventional cigarette. The aerosol-generating device 200 is a portable device that is configured to be held in the hand of a user. The aerosol-generating device 200 comprises a housing 202, which is generally cylindrical, having a length of about 90 mm, a diameter of about 14 mm.

An open, cylindrical cavity 204 is provided at a proximal end of the housing 202 of the device 200 for receiving aerosol-forming substrate of an aerosol-generating article. An elongate heater 206, in the form of blade, extends into the cavity 204 for penetrating into the aerosol-forming substrate of an aerosol-generating article received in the cavity 204. The heater 206 comprises a plurality of resistive heating elements or tracks disposed on an electrically insulating Polyimide substrate.

The cavity 204 is substantially cylindrical, having a circular base 205 and a tubular sidewall extending from the periphery of the base 205 to the open end of the cavity 204. The heater 206 extends into the cavity through the base 205.

A power supply 208, in the form of a lithium-ion battery with a capacity of about 120 milliampere-hours, is housed within the housing 202.

A controller 210 is also housed within the housing 202. The controller 210 comprises a microprocessor (not shown). The controller 210 is connected to the heater 206 and the power supply 208, and the controller 210 is configured to control the supply of power from the power supply 208 to the heater 206.

An electrical connector 212 is arranged at a distal end face of the housing 202, opposite the cavity 204. The power supply 208 and the controller 210 are connected to an electrical connector 212.

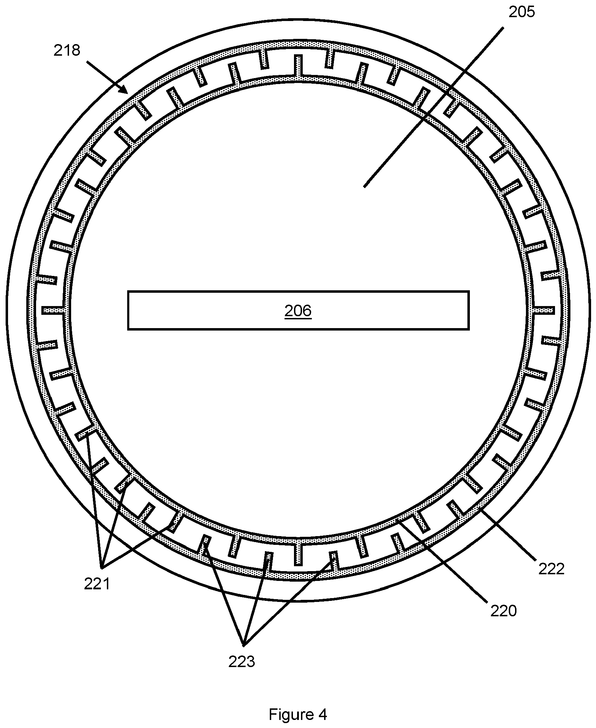

In accordance with the present invention, the aerosol-generating device 200 comprises residue detection means. In this embodiment, the residue detection means comprises a residue detector 218. The residue detector 218 is a capacitive sensor, as shown in Figure 4.

The capacitive sensor 218 comprises a pair of annular electrodes 220, 222 disposed on the base 205 of the cavity 204. The annular electrodes 220, 222 are arranged concentrically and circumscribe the heater 206. The annular electrodes 220, 222 are interdigitated electrodes, each electrode having a plurality of protrusions that are regularly spaced apart and arranged such that the protrusions of one electrode extend into the spaces between the protrusions of the other electrode.

A first annular electrode 220 comprises a plurality of protrusions 221 extending radially outwards from an annular main track. The protrusions 221 of the first electrode 220 are spaced apart to provide regular spaces between adjacent protrusions 221. A second annular electrode 222 comprises a plurality of protrusions 223 extending radially inwards from an annular main track. The protrusions 223 of the second electrode 222 are spaced apart to provide regular spaces between adjacent protrusions 223. The number of protrusions 221 of the first electrode 220 is the same as the number of protrusions 223 of the second electrode 222. The protrusions 221 of the first electrode 220 are substantially identical to the protrusions 223 of the second electrode 222, having the same length and width. The protrusions 221 of the first electrode 220 extend into the spaces between adjacent protrusions 223 of the second electrode 222, and the protrusions 223 of the second electrode 222 extend into the spaces between adjacent protrusions 221 of the first electrode 220.

The first electrode 220 and the second electrode 222 are spaced apart by a generally constant spacing around the circumference of the electrodes. The second electrode 220 has a diameter substantially equal to the diameter of the base 205 of the cavity 204, such that the second electrode substantially circumscribes the base 205 of the cavity 204. In this arrangement, the capacitive residue sensor 218 is arranged to sense aerosol-forming substrate residue at the periphery of the base 205 of the cavity 204.

The controller 210 is configured to supply an alternating voltage to the first electrode 220, such that the first electrode 220 is configured as a driving electrode. The controller 210 is further configured to measure the voltage at the second electrode 222, such that the second electrode 222 is configured as a sensing electrode. The controller 210 is further configured to use the voltage measured at the second electrode 222 to determine the capacitance of the capacitor formed by the first and second electrodes 220, 222.

When an oscillating voltage is supplied to the first electrode 220, an electric field is established between the first and second electrodes 220, 222, across the space between the electrodes. The electric field between the first and second electrodes 220, 222 comprises a fringing field that extends out from the base 205 and into the cavity 204. The fringing field impinges on aerosol-forming substrate residue disposed on the base 205 of the cavity 204, above and in the vicinity of the capacitive sensor 218. The capacitance of the capacitor formed by the first and second electrodes 220, 222 is changed when the fringing field impinges on aerosol-forming substrate residue disposed on the base 205 of the cavity 204, as a result of the dielectric properties of the aerosol-forming substrate residue, and in turn the voltage at the second electrode 223 measured by the controller 210 is changed. The amount of aerosol-forming substrate residue on the base 205 of the cavity 204 is related to the magnitude of the change of the capacitance of the capacitive residue sensor 218. Accordingly, the capacitance of the capacitive residue sensor 218 may provide an indication of the amount of aerosol-forming substrate residue on the base 205 of the cavity 204.

In this embodiment, the aerosol-generating device 200 further comprises an indicator in the form of a buzzer 214 for providing an audible warning to a user when it is determined that the amount of aerosol-forming substrate residue in the cavity 204 is above an acceptable level.

The aerosol-generating device 200 comprises a switch 215, which may be pressed by a user to prompt the controller 210 to measure the capacitance of the capacitive residue sensor 218 and to determine an indication of the amount of aerosol-forming substrate residue is in the cavity 204. The controller 210 is configured to compare the determined capacitance of the capacitive residue sensor 218 to a predetermined threshold. When the determined capacitance exceeds the predetermined threshold, the controller determines that the amount of aerosol-forming substrate residue in the cavity 204 is above an acceptable level. Accordingly, when the determined capacitance exceeds the predetermined threshold, the controller 210 is configured to send a signal to the buzzer 214 to activate the buzzer 214 to warn the user that the cavity 204 requires cleaning.

In this embodiment, the controller 210 is further configured to prevent power from being supplied to the heater 206 when the determined capacitance exceeds the predetermined threshold. As such, a user is required to clean the cavity 204 before being able to use the aerosol-generating device again. Once the cavity 204 has been cleaned, the user is required to press the button 215 a second time, such that the controller 210 determines the amount of aerosol-forming substrate residue in the cavity 204 for a second time. If the controller 210 determines that the amount of aerosol-forming substrate residue in the cavity is within the acceptable level, the controller 210 is configured to enable the supply of power from the power supply 208 to the heater 206 for heating aerosol-forming substrate.

In this embodiment, the capacitive residue sensor is disposed on the base of the cavity. However, it will be appreciated that in other embodiments a capacitive residue sensor may be arranged on one or more sidewalls of the cavity. The first and second electrodes may have interdigitated protrusions extending on a sidewall of the cavity, in a direction between a proximal end and distal end of the cavity. Such a capacitive sensor disposed on a sidewall of a cavity may be configured to sense aerosol-forming substrate residue on or in the vicinity of the sidewall of the cavity.

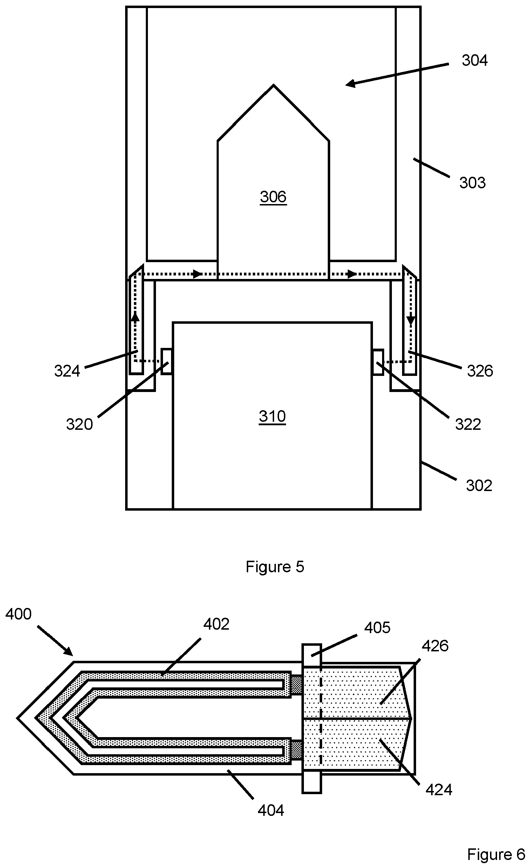

Figure 5 shows the proximal end of an aerosol-generating device 300 according to another embodiment of the present invention. The aerosol-generating device 300 is substantially similar to the aerosol-generating device 100 shown in Figure 1, and like reference numerals are used to refer to like features. The aerosol-generating device 300 shown in Figure 5 is configured to receive an aerosol-generating article (not shown) and comprises a housing 302, which is generally cylindrical, having a length of about 90 mm, a diameter of about 14 mm. An open cavity 304 is provided at a proximal end of the housing 302 for receiving the aerosol-forming substrate of an aerosol-generating article. An elongate heater 306, in the form of blade, extends into the cavity 304 for penetrating into the aerosol-forming substrate of an aerosol-generating article received in the cavity 304. The heater 306 comprises a plurality of resistive heating elements or tracks disposed on an electrically insulating Polyimide substrate.

The cavity 304 is substantially cylindrical, having a circular base 305. The heater 306 extends into the cavity 304 through a slot in the base 305.

In this embodiment, the housing 302 comprises an extractor 303 at the proximal end of the device 300. The extractor 303 defines the cavity 304, and is removably receivable on a distal portion of the housing 302. The extractor 303 comprises substantially tubular sidewalls and a base portion that extends inwards from the tubular sidewalls to define the base 305 of the cavity 304. The base portion comprises a slot for receiving the heater 306 when the extractor is received on the distal portion of the housing 302. The extractor 303 is configured to facilitate removal of an aerosol-generating article from the heater 306. Removal of the extractor 303 from the distal portion of the housing 302, in a proximal direction, removes an aerosol-generating article received in the cavity 304 from the heater 306.

A power supply (not shown), in the form of a lithium-ion battery with a capacity of about 120 milliampere-hours, is housed within the housing 302.

A controller 310 is also housed within the housing 302. The controller 310 comprises a microprocessor (not shown). The controller 310 is connected to the heater 306 and the power supply, and the controller 310 is configured to control the supply of power from the power supply to the heater 306.

In accordance with the present invention, the aerosol-generating device 300 comprises residue detection means. In this embodiment, the residue detection means comprises an optical residue detector. The optical residue detector comprises a light source 320, in the form of an LED configured to emit substantially white light, and a light sensor 322, in the form of a photodiode. The LED 320 and the photodiode 322 are mounted to opposite sides of the controller 310, such that the LED 320 and the photodiode 322 are positioned at opposite sides of the device 300.

The optical residue detector further comprises a pair of light guides 324, 326. The pair of light guides 324, 326 are arranged at opposite sides of the extractor 303, in distal portions of the extractor 303 that overlap with the distal portion of the housing 302 when the extractor 303 is received on the distal portion of the housing 302.

A first light guide 324 is arranged to align with the LED 320 when the extractor 303 is received on the distal portion of the housing 302. The first light guide 324 directs light from the LED into the cavity 304, substantially along the surface of the base 305 of the cavity 304.

A second light guide 326 is arranged to align with the photodiode 326 when the extractor 303 is received on the distal portion of the housing 302. The second light guide 326 directs light from the cavity 304 to the photodiode 326, particularly from the base 305 of the cavity 304.

In this arrangement, the optical residue detector is configured to direct light with a broad spectrum of wavelengths into the cavity 304, substantially along the base of the cavity 304, and to direct light out of the cavity 304 to the photodiode 322. Accordingly, the optical residue detector is configured to detect the presence of aerosol-forming substrate residue in the cavity 304, particularly at the base 305 of the cavity 304.

The controller 310 of the aerosol-generating device 300 is configured to determine an indication of the amount of aerosol-forming substrate residue in the cavity 304 and on the heater 306 from measurements of the intensity of light incident on the photodiode 322. The controller 310 is generally configured to use such residue determinations in a similar manner to the controller 210 of the device 200 described above and shown in Figure 4.

Figure 6 shows a heater assembly 400 for an aerosol-generating device according to another embodiment of the present invention. In this embodiment, the heater assembly 400 comprises a plurality of resistive heating elements 402 disposed on an electrically insulating Polyimide substrate 404. The electrically insulating substrate 404 and resistive heating elements 402 are formed into an elongate heating blade that is configured for insertion into an aerosol-forming substrate. A proximal end of the electrically insulating substrate 404 is tapered to a point to facilitate insertion of the heater into an aerosol-forming substrate.

In accordance with the present invention, the heater assembly 400 comprises a pair of light guides 424, 426 for an optical residue detector. The light guides 424, 426 are configured similarly to the light guides 324, 326 of the device 300 described above and shown in Figure 5. The light guides 424, 426 are arranged to extend along a distal portion of the electrically insulating substrate 404, on which the resistive heating elements 402 are not disposed. The distal portion of the electrically insulating substrate 404 and the light guides 424, 426 are over-moulded with a high temperature plastics material to secure the light guides 424, 426 to the electrically insulating substrate 404, and to provide a mount 405 for securing the heater assembly 400 to the housing of an aerosol-generating device.

When the heater assembly 400 is arranged in an aerosol-generating device, a first light guide 424 is arranged to direct light from a light source of an optical residue detector of the device into the cavity of the device at the base of the cavity, and a second light guide 246 is arranged to direct light from the base of the cavity of the device to a photodetector of the optical residue detector of the device. The heater assembly arrangement shown in Figure 4 may provide a straightforward, reliable and relatively inexpensive way to provide an aerosol-generating device with an optical residue detector.

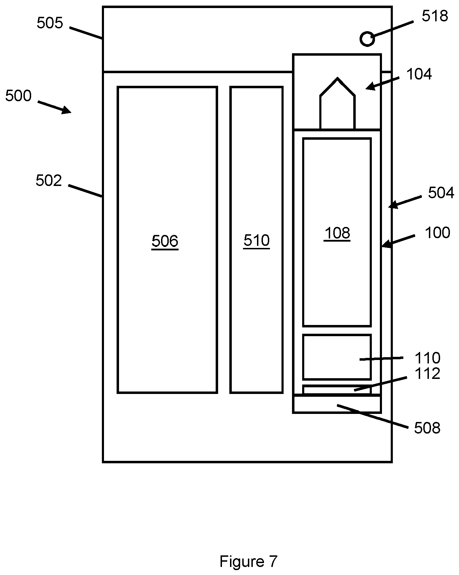

Figure 7 shows an aerosol-generating system comprising a case 500 according to another embodiment of the present invention. Figure 7 also shows the aerosol-generating device 100 described above and shown in Figure 1 received in the case 500.

The case 500 shown in Figure 7 is a portable charging case having a case housing 502 that is shaped and sized to be held in a hand of a user and to fit into a pocket of a user's clothing. The housing 502 is generally a rectangular cuboid having a length of about 20 mm, a width of about 50 mm and a height of about 110 mm.

The case housing 502 defines a case cavity 504 for receiving an aerosol-generating device. In Figure 7, the aerosol-generating device 100 of Figure 1 is received in the case cavity 504. The case cavity 504 is open at a proximal end of the case housing 502 to receive an aerosol-generating device and is closed at a distal end of the case housing 502, opposite the proximal end. A lid 505 is rotatably attached to the proximal end of the case housing 502, via a hinge, and is configured to be rotated relative to the case housing 502 between an open position and a closed position. When the lid 505 is in the closed position, the lid 505 is arranged to cover the open end of the case cavity 504. In the closed position, the case housing 502 and the lid 505 substantially surround or enclose the aerosol-generating device 100, when the aerosol-generating device 100 is received in the case cavity 504. When the lid 505 is in the open position, the open end of the case cavity 504 is uncovered and the aerosol-generating device 100 may be inserted into the case cavity 504 and removed from the case cavity 504.

A case power supply 506, in the form of a lithium-ion battery with a capacity of about 2900 milliampere-hours (mAh), is housed within the case housing 502.

An electrical connector 508 is arranged at the closed distal end of the case cavity 504 for receiving the aerosol-generating device 100. The electrical connector 508 is connected to the case power supply 506 and is arranged to electrically connect with the corresponding electrical connector 112 of the aerosol-generating device 100 when the aerosol-generating is fully received in the chamber 504.

A case controller 510 is also housed within the case housing 502. The case controller 510 is connected to the case power supply 506 and to the electrical connector 508 and is configured to control the supply of power from the case power supply 506 to the electrical connector 508.

The case controller 510 and electrical connector 508 are configured to supply electrical power to the aerosol-generating device 100 received in the case cavity 504, and are also configured to communicate with the aerosol-generating device 100, to transfer data to the aerosol-generating device 100 and to receive data from the aerosol-generating device 100.

The case controller 510 comprises a microprocessor (not shown) and also comprises a communication interface (not shown), which in this embodiment comprises a telemetry circuit and an antenna for bidirectional communication with an external device or server. In this embodiment, the communication interface is a wireless interface using Bluetooth^{®} protocol to communicate with an extremal device or server. Typically, the communication interface is configured to communicate with a user's smartphone.

In accordance with the present invention, the case 500 comprises a residue detector 518. The residue detector 518 is arranged on the lid 505 of the case 500, directly above the proximal end of the case cavity 504. In this position, the residue detector 518 is arranged over the open end of the device cavity 104 of the aerosol-generating device 100 when the aerosol-generating device 100 is received in the case cavity 504 and the lid 505 is in the closed position.

In some embodiments, the lid 505 of the case 500 may comprises a protrusion arranged to be received in the device cavity 504 when the aerosol-generating device 100 is received in the case cavity 504 and the lid 505 is in the closed position. In these embodiments, the residue detector 518 may be arranged on the protrusion.

In this embodiment, the residue detector 518 is a VOC detector. Accordingly, volatile organic compounds evolved from aerosol-forming substrate residue in the device cavity 104 or on the heater 106 may be detected by the VOC detector 518 of the case 500. The residue detector 518 is electrically connected to the case controller 510 via a flexible circuit (not shown). The flexible circuit enables a robust electrical connection between the residue detector 518 and the case controller 510, while also permitting rotation of the lid 505 relative to the case housing 502.

The case controller 510 is configured to take readings from the residue detector 518 a predetermined period of time after the lid 505 is moved into the closed position. In this embodiment, the predetermined period of time is ten seconds. The case controller 510 is configured to determine an indication of the amount of residue in the device cavity 104 or on the heater 106 based on one or more readings from the residue detector. Specifically, in this embodiment the case controller 510 is configured to compare one or more readings from the residue detector 518 to a predetermined threshold. When the one or more readings from the residue detector 518 exceed the predetermined threshold, the case controller 510 is configured to determine that the amount of aerosol-forming substrate residue in the device cavity 104 and on the heater 106 is above an acceptable level. When the one or more readings from the residue detector 518 exceed the predetermined threshold, the case controller 510 is configured to initiate a cleaning cycle in the aerosol-generating device 100.

When the one or more readings from the residue detector 518 exceed the predetermined threshold, the case controller 510 is configured to send a cleaning signal to the device controller 110 of the aerosol-generating device 100, over a communications link, via the electrical connectors 508, 112.

In this embodiment, the device controller 110 is configured to receive a cleaning signal from the case controller 510. When the device controller 110 receives a cleaning signal from the case controller 510, the device controller 110 is configured to supply power to the heater 106 in a cleaning cycle. In the cleaning cycle, the device controller 110 supplies power to the heater to raise the temperature of the heater sufficiently to thermally liberate organic materials adhered to or deposited in the device cavity 104 or on the heater. 106.

After each determination of the indication of the amount of residue in the device cavity 104 or on the heater 106, the case controller 510 is further configured to output a residue signal based on the determination to the communication interface of the case controller 510. The communication interface is configured to communicate the residue signal to a user's smartphone over a communications link using Bluetooth^{®} protocol.

It is envisaged that a program may be stored on the user's smartphone for analysing residue information in the residue signal. In some embodiments, the program stored on the user's smartphone may not be configured to analyse the data received in the residue signal, but rather may be configured to forward the data or the signal to an external server, such as a cloud server for analysis.

In some embodiments, the case 500 may further comprises a graphical display at an outer surface of the case housing 502. The case controller 510 may be further configured to display residue amount information based on the determined indication to a user on the display.

In some embodiments, the case controller may not be configured to initiate residue detection a predetermined period of time after the lid is moved into the closed position, but rather a switch may be provided on the case for a user to actuate to initiate residue detection. In these embodiments, a user may determine when to initiate residue detection and a cleaning cycle.

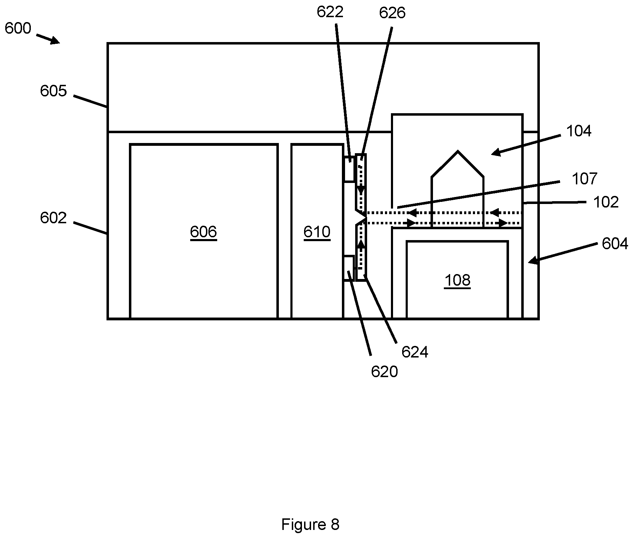

Figure 8 shows a proximal portion of an aerosol-generating system comprising a case 600 according to another embodiment of the present invention, and the aerosol-generating device 100 of Figure 1 received in the case 600. The case 600 shown in Figure 8 is substantially similar to the case 500 shown in Figure 7, and like reference numerals are used to describe like features. The case 600 is a portable charging case having a case housing 602 that is shaped and sized to be held in a hand of a user and to fit into a pocket of a user's clothing.

The case housing 602 defines a case cavity 604, and comprises a lid 605, both of which are identical to the case cavity 504 and lid 505 described above in relation to the embodiment of Figure 7. A case power supply 606, in the form of a lithium-ion battery with a capacity of about 2900 milliampere-hours (mAh), is housed within the case housing 602. An electrical connector (not shown) is also arranged at the distal end of the case cavity 604 for receiving the aerosol-generating device, as described above in relation to the embodiment of Figure 7. A case controller 610 is housed within the case housing 602, and is arranged and configured substantially as described above in relation to the embodiment of Figure 7.

In accordance with the present invention, the case 600 comprises a residue detector. In this embodiment, the residue detector is an optical residue detector comprising a light source 620, in the form of an LED configured to emit substantially white light, a light sensor 622, in the form of a photodiode, and two light guides 624, 626.

In this embodiment, the device housing 102 of the aerosol-generating device comprises a window 107 at the base of the device cavity 104. The window 107 enables light to travel through the device housing 102, into and out of the device cavity 104. In this embodiment, the window 107 is comprised of a transparent, high temperature plastics material. However, in other embodiments, the window may be a slot or space in the device housing 104 to enable light to travel into and out of the device cavity 104.

The light guides 624, 627 of the optical residue detector of the case 600 are arranged to direct light into and out of the window 107 in the device housing 102 when the aerosol-generating device 100 is received in the case cavity 604. A first light guide 624 is arranged to direct light from the LED 620 into the device cavity 104, through the window 107 in the device housing 102. A second light guide 626 is arranged to direct light from the device cavity 104 to the photodiode 622, through the window 107 in the device housing 102.

The case controller 610 is configured to determine an indication of the amount of aerosol-forming substrate residue in the device cavity 104 and on the heater 106 based on readings from the photodiode 622.

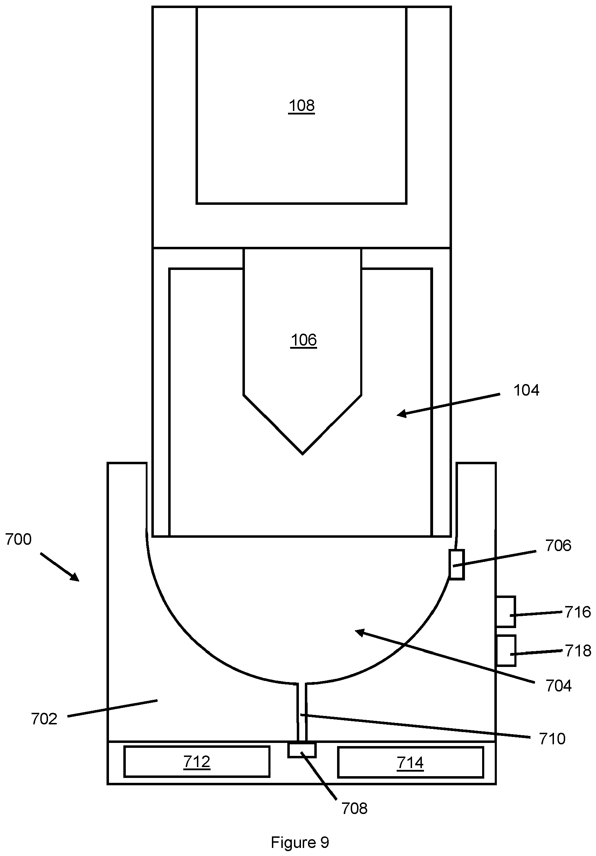

Figure 9 shows a residue detector device 700 according to another embodiment of the present invention. The residue detector device 700 comprises a residue detector body 702 defining a substantially hemispherical detector cavity 704. The detector cavity 704 is shaped and sized to receive a proximal portion of an aerosol-generating device, such as the aerosol-generating device 100 of the embodiment of Figure 1, as shown in Figure 9.

In accordance with the present invention, the residue detector device 700 comprises a residue detector. In this embodiment, the residue detector is an optical residue detector comprising a light source 706, in the form of an LED configured to emit substantially white light, and a light sensor 708, in the form of a photodiode.

The LED 706 is positioned towards an edge of the hemispherical detector cavity 704, and arranged to direct light towards the opposite side of the detector cavity 704. The surface of the detector cavity 704 is provided with a reflective coating for reflecting the light from the LED 708. The hemispherical shape of the detector cavity 704 results in light incident on the surface of the cavity 704 being reflected in all directions, such that light from the LED 706 may fall on most surfaces of a device cavity 104 and heater 106 of the aerosol-generating device 100 when the proximal end of the aerosol-generating device 100 is received in the detector cavity 704.

The photodiode 708 is arranged at one end of a channel 710, which extends centrally through the detector housing 702 from the surface of the detector cavity 704 to the photodiode 708. The channel 710 is configured to enable light to travel from the detector cavity 704 to the photodiode 708. In this embodiment, the channel is an empty channel, but in some embodiments the channel may comprise a light guide, such as an optical fibre.

The residue detector device 700 further comprises a power supply 712 and a controller 714 housed in the detector housing 702. The residue detector device 700 also comprises a switch 716 and visual indicator 716 in the form of an LED on an external surface of the detector housing 702.

The detector controller 714 is configured to control a supply of power from the detector power supply 712 to the LED 706 and photodiode 708 of the optical residue detector, and to the LED of the visual indicator 716. The detector controller 714 is further configured to illuminate the LED 706 of the optical residue detector and take readings from the photodiode 708 when a user presses the switch 716. The controller is configured to determine an indication of the amount of aerosol-forming substrate residue in the device cavity 104 and on the heater 106 of the aerosol-generating device 100 received in the detector cavity 704 based on signals from the photodiode 708. When the determined indication of the amount of residue is above a predetermined threshold stored in a memory of the detector controller 714, the detector controller 714 is configured to illuminate the visual indicator LED 716 to alert a user that the amount of aerosol-forming substrate residue in the device cavity 104 and on the heater 106 is above an acceptable level and the aerosol-generating device 100 requires cleaning.

It will be appreciated that in other embodiments the residue detector device may comprise other residue detectors. For example, the residue detector device may comprise one or more of a VOC detector and a carbon dioxide detector. In other embodiments, the residue detector device may also be a part of a cleaning system. The cleaning system may comprise the residue detector device and a cleaning tool, such as a brush. The cleaning tool and the residue detector device may be removably securable together. A coupler may be provided to removably secure together the cleaning tool and the residue detector device.

## Claims

1. An aerosol-generating device comprising:
a cavity (104, 204, 304) for receiving an aerosol-generating article comprising an aerosol-forming substrate;
a heater (106, 206, 306) arranged to heat aerosol-forming substrate received in the cavity (104, 204, 304);
a power supply (108, 208);
residue detection means for sensing aerosol-forming substrate residue in the cavity (104, 204, 304) or on the heater (106, 206, 306); and
a controller (110, 210, 310) configured to:
control the supply of power from the power supply (108, 208) to the heater (106, 206, 306) to heat aerosol-forming substrate received in the cavity (104, 204, 304);
receive signals from the residue detection means indicative of the amount of aerosol-forming substrate residue in the cavity (104, 204, 304) or on the heater (106, 206, 306); and
determine an indication of the amount of aerosol-forming substrate residue in the cavity (104, 204, 304) or on the heater (106, 206, 306) based on one or more signal received from the residue detection means.

2. An aerosol-generating device according to claim 1, wherein the controller (110, 210, 310) is further configured to prevent power from being supplied from the power supply (108, 208) to the heater (106, 206, 306) to heat aerosol-forming substrate in the cavity (104, 204, 304) when the determined indication exceeds a threshold.

3. An aerosol-generating device according to claims 1 or 2, wherein the heater (106, 206, 306) is an elongate heater (106, 206, 306) arranged for insertion into an aerosol-generating article when an aerosol-generating article is received within the cavity (104, 204, 304), and the heater (106, 206, 306) comprises a resistive heating element.

4. An aerosol-generating device according to claim 3, wherein the residue detection means comprises a configuration of the controller (110), such that the controller (110) is configured to:
measure the resistance of the resistive heating element; and
determine an indication of the amount of aerosol-forming substrate residue in the cavity (104) or on the heater (106) based on the measured resistance of the resistive heating element.

5. An aerosol-generating device according to claim 4, wherein the controller (110) is further configured to:
supply power from the power supply (108) to heater (106) for heating aerosol-forming substrate received in the cavity (104);
terminate the supply of power to the heater (106) for heating the aerosol-forming substrate received in the cavity (104), and, after a predetermined time, measure the resistance of the resistive heating element of the heater (106); and
determine the indication of the amount of aerosol-forming substrate residue on the heater (106) based on the resistance measurements of the resistive heating element.

6. An aerosol-generating device according to claims 4 or 5, wherein the determination of the indication of the amount of aerosol-forming substrate residue in the cavity (104) is based on a rate of change of the measurements of the resistance of the resistive heating element.

7. An aerosol-generating device according to claim 4, wherein the controller (110) is configured to:
determine a characteristic of a puff of a user from measurements of the resistance of the heating element; and
determine the indication of the amount of aerosol-forming substrate residue in the cavity (104) or on the heater (106) based on the determined characteristic of the puff of a user.

8. An aerosol-generating device according to claim 7, wherein the determined characteristic of a puff of a user is one or more of the volume of a puff and the duration of a puff, and wherein the determination of the indication of the amount of aerosol-forming substrate residue in the cavity (104) or on the heater (106) is based on a change in the determined characteristic of a puff of a user over time.

9. An aerosol-generating device according to claims 1, 2 or 3, wherein the residue detection means comprises a residue detector arranged at or around the cavity (204, 304).

10. An aerosol-generating device according to claim 9, wherein the determination of the indication of the amount of aerosol-forming substrate residue in the cavity (204, 304) is based on signals received from the residue detector at least a predetermined period of time after termination of a supply of power from the power supply (208, 308) to the heater (206, 306) for heating aerosol-forming substrate in the cavity (204, 304).

11. An aerosol-generating device according to claims 9 or 10, wherein the residue detector comprises at least one of: a volatile organic compound (VOC) detector; an optical detector; a capacitor (218); and an acoustic detector.

12. An aerosol-generating device according to claim 11, wherein the residue detector comprises an optical detector, and wherein the optical detector comprises a light source (320) arranged to direct light into the cavity (304) and a light sensor (322) arranged to receive light from the cavity (304).

13. An aerosol-generating system comprising:
an aerosol-generating device comprising:
a device cavity (104, 204, 304) for receiving an aerosol-generating article comprising an aerosol-forming substrate;
a heater (106, 206, 306) arranged to heat aerosol-forming substrate received in the cavity (104, 204, 304);
a device power supply (108, 208); and
a device controller (110, 210, 310) configured to control the supply of power from the device power supply (108, 208) to the heater (106, 206, 306) to heat aerosol-forming substrate received in the device cavity (104, 204, 304); and
a case (500, 600) for receiving the aerosol-generating device, the case comprising:
a case cavity (504, 604) for receiving the aerosol-generating device;
a residue detector arranged to sense aerosol-forming substrate residue in the device cavity (104, 204, 304) or on the heater (106, 206, 306) when the aerosol-generating device is received in the case cavity (504, 604); and
a case controller (510, 610) configured to:
receive signals from the residue detector indicative of the amount of aerosol-forming substrate residue in the device cavity (104, 204, 304) or on the heater (106, 206, 306); and
determine an indication of the amount of aerosol-forming substrate residue in the device cavity (104, 204, 304) or on the heater (106, 206, 306) based on signals received from the residue detector.

14. An aerosol-generating system according to claim 13, wherein:
the case controller (510, 610) is further configured to:
compare the determined indication of the amount of aerosol-forming substrate residue in the device cavity (104, 204, 304) or on the heater (106, 206, 306) to a threshold; and
send a cleaning signal to the controller (110, 210, 310) of the aerosol-generating device when the determined indication of the amount of aerosol-forming substrate residue in the device cavity (104, 204, 304) or on the heater (106, 206, 306) exceeds the threshold; and the device controller is further configured to:
supply power to the heater (106, 206, 306) to raise the temperature of the heater (106, 206, 306) to a first temperature for heating the aerosol-forming substrate received in the cavity sufficiently for an aerosol to be formed;
receive cleaning signals from the controller (510, 610) of the case (500, 600); and
supply power to the heater (106, 206, 306) to raise the temperature of the heater (106, 206, 306) to a second temperature, higher than the first temperature, to thermally liberate organic materials adhered to or deposited in the cavity (104, 204, 304) or on the heater (106, 206, 306) when a cleaning signal is received from the case controller (510, 610).

15. A residue detector device (700) for detecting aerosol-forming substrate residue in an aerosol-generating device, the residue detector device (700) comprising:
a residue detector cavity (704) for receiving at least a portion of an aerosol-generating device;
a residue detector arranged to sense aerosol-forming substrate residue on the portion of an aerosol-generating device received in the residue detector cavity (704); and
a controller (714) configured to:
receive signals from the residue detector indicative of the amount of aerosol-forming substrate residue on the portion of the aerosol-generating device received in the residue detector cavity (704); and
determine an indication of the amount of aerosol-forming substrate residue on the portion of the aerosol-generating device received in the residue detector cavity (704) based on signals received from the residue detector.

## Patentansprüche

1. Aerosolerzeugungsvorrichtung, umfassend:
einen Hohlraum (104, 204, 304) zum Aufnehmen eines aerosolerzeugenden Artikels, umfassend ein aerosolbildendes Substrat;
eine zum Erwärmen eines in dem Hohlraum (104, 204, 304) aufgenommenen aerosolbildenden Substrats angeordnete Heizvorrichtung (106, 206, 306);
eine elektrische Energieversorgung (108, 208);
Mittel zur Detektion von Rückständen zum Erfassen von Rückständen eines aerosolbildenden Substrats in dem Hohlraum (104, 204, 304) oder auf der Heizvorrichtung (106, 206, 306); und
eine Steuerung (110, 210, 310), ausgelegt zum:
Regeln der Zuführung von Energie von der Energieversorgung (108, 208) an die Heizvorrichtung (106, 206, 306) zum Erwärmen des in dem Hohlraum (104, 204, 304) aufgenommenen aerosolbildenden Substrats;
Empfangen von Signalen von dem Mittel zur Detektion von Rückständen, die die Menge an Rückständen des aerosolbildenden Substrats in dem Hohlraum (104, 204, 304) oder auf der Heizvorrichtung (106, 206, 306) angeben; und
Ermitteln einer Angabe der Menge an Rückständen eines aerosolbildenden Substrats in dem Hohlraum (104, 204, 304) oder auf der Heizvorrichtung (106, 206, 306) basierend auf einem oder mehreren Signalen, die von dem Mittel zur Detektion von Rückständen empfangen werden.

2. Aerosolerzeugungsvorrichtung nach Anspruch 1, wobei die Steuerung (110, 210, 310) ferner ausgelegt ist, das Zuführen von Energie von der Energieversorgung (108, 208) an die Heizvorrichtung (106, 206, 306) zum Erwärmen eines aerosolbildenden Substrats in dem Hohlraum (104, 204, 304) zu verhindern, wenn die ermittelte Angabe einen Schwellenwert überschreitet.

3. Aerosolerzeugungsvorrichtung nach Anspruch 1 oder 2, wobei die Heizvorrichtung (106, 206, 306) eine längliche Heizvorrichtung (106, 206, 306) ist, die zum Einsetzen in einen aerosolerzeugenden Artikel angeordnet ist, wenn ein aerosolerzeugender Artikel innerhalb des Hohlraums (104, 204, 304) aufgenommen wird, und die Heizvorrichtung (106, 206, 306) ein Widerstandsheizelement umfasst.

4. Aerosolerzeugungsvorrichtung nach Anspruch 3, wobei das Mittel zur Detektion von Rückständen eine Ausgestaltung der Steuerung (110) umfasst, sodass die Steuerung (110) ausgelegt ist zum:
Messen des Widerstandes des Widerstandsheizelements; und
Ermitteln einer Angabe der Menge an Rückständen des aerosolbildenden Substrats in dem Hohlraum (104) oder auf der Heizvorrichtung (106) basierend auf dem gemessenen Widerstand des Widerstandsheizelements.

5. Aerosolerzeugungsvorrichtung nach Anspruch 4, wobei die Steuerung (110) ferner ausgelegt ist zum:
Zuführen von Energie von der Energieversorgung (108) an die Heizvorrichtung (106) zum Erwärmen eines in dem Hohlraum (104) aufgenommenen aerosolbildenden Substrats;
Beenden der Zuführung von Energie an die Heizvorrichtung (106) zum Erwärmen des in dem Hohlraum (104) aufgenommenen aerosolbildenden Substrats und, nach einer vorbestimmten Zeit, Messen des Widerstandes des Widerstandsheizelements der Heizvorrichtung (106); und
Ermitteln der Angabe der Menge an Rückständen des aerosolbildenden Substrats auf der Heizvorrichtung (106) basierend auf den Widerstandsmessungen des Widerstandsheizelements.

6. Aerosolerzeugungsvorrichtung nach Anspruch 4 oder 5, wobei das Ermitteln der Angabe der Menge des aerosolbildenden Substrats in dem Hohlraum (104) auf einer Änderungsgeschwindigkeit der Messungen des Widerstandes des Widerstandsheizelements basiert.

7. Aerosolerzeugungsvorrichtung nach Anspruch 4, wobei die Steuerung (110) ausgelegt ist zum:
Ermitteln einer Eigenschaft eines Zuges eines Benutzers aus Messungen des Widerstands des Heizelements; und
Ermitteln der Angabe der Menge an Rückständen von aerosolbildendem Substrat in dem Hohlraum (104) oder auf der Heizvorrichtung (106) basierend auf der ermittelten Eigenschaft des Zuges eines Benutzers.

8. Aerosolerzeugungsvorrichtung nach Anspruch 7, wobei die ermittelte Eigenschaft eines Zuges eines Benutzers eine oder mehrere ist aus dem Volumen eines Zuges und der Dauer eines Zuges, und wobei das Ermitteln der Angabe der Menge an Rückständen des aerosolbildenden Substrats in dem Hohlraum (104) oder auf der Heizvorrichtung (106) auf einer Änderung der ermittelten Eigenschaft eines Zuges eines Benutzers über die Zeit basiert.

9. Aerosolerzeugungsvorrichtung nach Anspruch 1, 2 oder 3, wobei das Mittel zur Detektion von Rückständen einen Rückstanddetektor umfasst, der an dem oder um den Hohlraum (204, 304) angeordnet ist.

10. Aerosolerzeugungsvorrichtung nach Anspruch 9, wobei das Ermitteln der Angabe der Menge an Rückständen des aerosolbildenden Substrats in dem Hohlraum (204, 304) auf Signalen basiert, die von dem Rückstanddetektor wenigstens eine vorbestimmte Zeitspanne nach Beendigung einer Zuführung von Energie von der Energieversorgung (208, 308) an die Heizvorrichtung (206, 306) zum Erwärmen eines aerosolbildenden Substrats in dem Hohlraum (204, 304) empfangen werden.

11. Aerosolerzeugungsvorrichtung nach Anspruch 9 oder 10, wobei der Rückstanddetektor wenigstens eines umfasst von: einem Detektor für flüchtige organische Verbindungen (VOC); einem optischen Detektor; einem Kondensator (218); und einem akustischen Detektor.

12. Aerosolerzeugungsvorrichtung nach Anspruch 11, wobei der Rückstanddetektor einen optischen Detektor umfasst und wobei der optische Detektor eine zum Richten von Licht in den Hohlraum (304) angeordnete Lichtquelle (320) und einen zum Empfangen von Licht aus dem Hohlraum (304) angeordneten Lichtsensor (322) aufweist.

13. Aerosolerzeugungssystem, aufweisend:
eine Aerosolerzeugungsvorrichtung, aufweisend:
einen Vorrichtungshohlraum (104, 204, 304) zum Aufnehmen eines aerosolerzeugenden Artikels, umfassend ein aerosolbildendes Substrat;
eine zum Erwärmen eines in dem Hohlraum (104, 204, 304) aufgenommenen aerosolbildenden Substrats angeordnete Heizvorrichtung (106, 206, 306);
eine Vorrichtungs-Energieversorgung (108, 208); und
eine Vorrichtungssteuerung (110, 210, 310), ausgelegt zum Regeln der Zuführung von Energie von der Vorrichtungs-Energieversorgung (108, 208) an die Heizvorrichtung (106, 206, 306) zum Erwärmen des in dem Vorrichtungshohlraum (104, 204, 304) aufgenommene aerosolbildende Substrat; und
ein Gehäuse (500, 600) zum Aufnehmen der Aerosolerzeugungsvorrichtung, das Gehäuse umfassend:
einen Gehäusehohlraum (504, 604) zum Aufnehmen der Aerosolerzeugungsvorrichtung;
ein Rückstanddetektor, angeordnet zum Erfassen von Rückständen eines aerosolbildenden Substrats in dem Vorrichtungshohlraum (104, 204, 304) oder auf der Heizvorrichtung (106, 206, 306), wenn die Aerosolerzeugungsvorrichtung in dem Hohlraum des Gehäuses (504, 604) aufgenommen ist; und
eine Gehäusesteuerung (510, 610), ausgelegt zum:
Empfangen von Signalen von dem Rückstanddetektor, die die Menge an Rückständen eines aerosolbildenden Substrats in dem Vorrichtungshohlraum (104, 204, 304) oder auf der Heizvorrichtung (106, 206, 306) angeben; und
Ermitteln einer Angabe der Menge an Rückständen eines aerosolbildenden Substrats in dem Vorrichtungshohlraum (104, 204, 304) oder auf der Heizvorrichtung (106, 206, 306) basierend auf von dem Rückstanddetektor empfangenen Signalen.

14. Aerosolerzeugungssystem nach Anspruch 13, wobei:
die Gehäusesteuerung (510, 610) ferner ausgelegt ist zum:
Vergleichen der ermittelten Angabe der Menge an Rückständen des aerosolbildenden Substrats in dem Vorrichtungshohlraum (104, 204, 304) oder an der Heizvorrichtung (106, 206, 306) mit einem Schwellenwert; und
Senden eines Reinigungssignal an die Steuerung (110, 210, 310) der Aerosolerzeugungsvorrichtung, wenn die ermittelte Angabe der Menge an Rückständen des aerosolbildenden Substrats in dem Vorrichtungshohlraum (104, 204, 304) oder auf der Heizvorrichtung (106, 206, 306) den Schwellenwert überschreitet; und
die Vorrichtungssteuerung ferner ausgelegt ist zum:
Zuführen von Energie an die Heizvorrichtung (106, 206, 306) zum ausreichenden Erhöhen der Temperatur der Heizvorrichtung (106, 206, 306) auf eine erste Temperatur zum Erwärmen des in dem Hohlraum aufgenommenen aerosolbildenden Substrats zum Bilden eines Aerosols;
Empfangen von Reinigungssignalen von der Steuerung (510, 610) des Gehäuses (500, 600); und
Zuführen von Energie an die Heizvorrichtung (106, 206, 306) zum Erhöhen der Temperatur der Heizvorrichtung (106, 206, 306) auf eine zweite Temperatur, die höher als die erste Temperatur ist, zum thermischen Freisetzen von organischen Materialien, die an oder in dem Hohlraum (104, 204, 304) oder auf der Heizvorrichtung (106, 206, 306) anhaften oder abgelagert sind, wenn ein Reinigungssignal von der Gehäusesteuerung (510, 610) empfangen wird.

15. Rückstanddetektorvorrichtung (700) zum Detektieren von Rückständen eines aerosolbildenden Substrats in einer Aerosolerzeugungsvorrichtung, wobei die Rückstandsdetektorvorrichtung (700) umfasst:
einen Rückstanddetektorhohlraum (704) zum Aufnehmen wenigstens eines Abschnitts einer Aerosolerzeugungsvorrichtung;
einen zum Erfassen von Rückständen eines aerosolbildenden Substrats an dem in dem Rückstanddetektorhohlraum (704) aufgenommenen Abschnitt einer Aerosolerzeugungsvorrichtung angeordneten Rückstanddetektor; und
eine Steuerung (714), ausgelegt zum:
Empfangen von Signale von dem Rückstanddetektor, die die Menge an Rückständen des aerosolbildenden Substrats auf dem in dem Rückstanddetektorhohlraum (704) aufgenommenen Abschnitt der Aerosolerzeugungsvorrichtung angeben; und
Ermitteln einer Angabe der Menge an Rückständen des aerosolbildenden Substrats auf dem in dem Rückstanddetektorhohlraum (704) aufgenommenen Abschnitt der Aerosolerzeugungsvorrichtung basierend auf von dem Rückstanddetektor empfangenen Signalen.

## Revendications

1. Dispositif de génération d'aérosol comprenant :
une cavité (104, 204, 304) destinée à recevoir un article de génération d'aérosol comprenant un substrat formant aérosol ;
un dispositif de chauffage (106, 206, 306) agencé pour chauffer un substrat formant aérosol reçu dans la cavité (104, 204, 304) ;
une alimentation électrique (108, 208) ;
un moyen de détection de résidus pour capter un résidu de substrat formant aérosol dans la cavité (104, 204, 304) ou sur le dispositif de chauffage (106, 206, 306) ; et
un dispositif de commande (110, 210, 310) configuré pour :
commander l'alimentation en puissance depuis l'alimentation électrique (108, 208) vers le dispositif de chauffage (106, 206, 306) pour chauffer le substrat formant aérosol reçu dans la cavité (104, 204, 304) ;
recevoir des signaux provenant du moyen de détection de résidus indiquant la quantité de résidus de substrat formant aérosol dans la cavité (104, 204, 304) ou sur le dispositif de chauffage (106, 206, 306) ; et
déterminer une indication de la quantité de résidus de substrat formant aérosol dans la cavité (104, 204, 304) ou sur le dispositif de chauffage (106, 206, 306) sur la base d'un ou plusieurs signaux reçus depuis le moyen de détection de résidus.

2. Dispositif de génération d'aérosol selon la revendication 1, dans lequel le dispositif de commande (110, 210, 310) est en outre configuré pour empêcher l'alimentation en puissance depuis l'alimentation électrique (108, 208) vers le dispositif de chauffage (106, 206, 306) pour chauffer le substrat formant aérosol dans la cavité (104, 204, 304) lorsque l'indication déterminée dépasse un seuil.

3. Dispositif de génération d'aérosol selon la revendication 1 ou 2, dans lequel le dispositif de chauffage (106, 206, 306) est un dispositif de chauffage allongé (106, 206, 306) agencé pour être inséré dans un article de génération d'aérosol lorsqu'un article de génération d'aérosol est reçu au sein de la cavité (104, 204, 304), et le dispositif de chauffage (106, 206, 306) comprend un élément de chauffage résistif.

4. Dispositif de génération d'aérosol selon la revendication 3, dans lequel le moyen de détection de résidus comprend une configuration du dispositif de commande (110), de telle sorte que le dispositif de commande (110) est configuré pour :
mesurer la résistance de l'élément de chauffage résistif ; et
déterminer une indication de la quantité de résidus de substrat formant aérosol dans la cavité (104) ou sur le dispositif de chauffage (106) sur la base de la résistance mesurée de l'élément de chauffage résistif.

5. Dispositif de génération d'aérosol selon la revendication 4, dans lequel le dispositif de commande (110) est configuré en outre pour :
alimenter en puissance depuis l'alimentation électrique (108) vers le dispositif de chauffage (106) pour chauffer le substrat formant aérosol reçu dans la cavité (104) ;
arrêter l'alimentation électrique du dispositif de chauffage (106) pour chauffer le substrat formant aérosol reçu dans la cavité (104), et, après un temps prédéterminé, mesurer la résistance de l'élément de chauffage résistif du dispositif de chauffage (106) ; et
déterminer l'indication de la quantité de résidus de substrat formant aérosol sur le dispositif de chauffage (106) sur la base des mesures de résistance de l'élément de chauffage résistif.

6. Dispositif de génération d'aérosol selon la revendication 4 ou 5, dans lequel la détermination de l'indication de la quantité de résidus de substrat formant aérosol dans la cavité (104) est basée sur une vitesse de changement des mesures de la résistance de l'élément de chauffage résistif.

7. Dispositif de génération d'aérosol selon la revendication 4, dans lequel le dispositif de commande (110) est configuré pour :
déterminer une caractéristique d'une bouffée d'un utilisateur à partir de mesures de la résistance de l'élément de chauffage ; et
déterminer l'indication de la quantité de résidus de substrat formant aérosol dans la cavité (104) ou sur le dispositif de chauffage (106) sur la base de la caractéristique déterminée de la bouffée d'un utilisateur.

8. Dispositif de génération d'aérosol selon la revendication 7, dans lequel la caractéristique déterminée d'une bouffée d'un utilisateur est un ou plusieurs parmi le volume d'une bouffée et la durée d'une bouffée, et dans lequel la détermination de l'indication de la quantité de résidus de substrat formant aérosol dans la cavité (104) ou sur le dispositif de chauffage (106) est basée sur un changement de la caractéristique déterminée d'une bouffée d'un utilisateur au cours du temps.

9. Dispositif de génération d'aérosol selon les revendications 1, 2 ou 3, dans lequel le moyen de détection de résidus comprend un détecteur de résidus agencé au niveau ou autour de la cavité (204, 304).

10. Dispositif de génération d'aérosol selon la revendication 9, dans lequel la détermination de l'indication de la quantité de résidus de substrat formant aérosol dans la cavité (204, 304) est basée sur des signaux reçus depuis le détecteur de résidu au moins une période de temps prédéterminée après l'arrêt d'une alimentation en puissance depuis l'alimentation électrique (208, 308) vers le dispositif de chauffage (206, 306) pour chauffer le substrat formant aérosol dans la cavité (204, 304).

11. Dispositif de génération d'aérosol selon la revendication 9 ou 10, dans lequel le détecteur de résidus comprend au moins l'un parmi : un détecteur de composés organiques volatils (COV) ; un détecteur optique ; un condensateur (218) ; et un détecteur acoustique.

12. Dispositif de génération d'aérosol selon la revendication 11, dans lequel le détecteur de résidus comprend un détecteur optique, et dans lequel le détecteur optique comprend une source lumineuse (320) agencée pour diriger la lumière jusque dans la cavité (304) et un capteur de lumière (322) agencé pour recevoir la lumière provenant de la cavité (304).

13. Système de génération d'aérosol comprenant :
un dispositif de génération d'aérosol comprenant :
une cavité de dispositif (104, 204, 304) destinée à recevoir un article de génération d'aérosol comprenant un substrat formant aérosol ;
un dispositif de chauffage (106, 206, 306) agencé pour chauffer un substrat formant aérosol reçu dans la cavité (104, 204, 304) ;
une alimentation électrique de dispositif (108, 208) ; et
un dispositif de commande de dispositif (110, 210, 310) configuré pour commander l'alimentation en puissance depuis l'alimentation électrique de dispositif (108, 208) vers le dispositif de chauffage (106, 206, 306) pour chauffer le substrat formant aérosol reçu dans la cavité de dispositif (104, 204, 304) ; et
un boîtier (500, 600) destiné à recevoir le dispositif de génération d'aérosol, le boîtier comprenant :
une cavité de dispositif (504, 604) destinée à recevoir le dispositif de génération d'aérosol ;
un détecteur de résidus agencé pour capter un résidu de substrat formant aérosol dans la cavité de dispositif (104, 204, 304) ou sur le dispositif de chauffage (106, 206, 306) lorsque le dispositif de génération d'aérosol est reçu dans la cavité de boîtier (504, 604) ; et
un dispositif de commande de boîtier (510, 610) configuré pour :
recevoir des signaux provenant du détecteur de résidus indiquant la quantité de résidus de substrat formant aérosol dans la cavité de dispositif (104, 204, 304) ou sur le dispositif de chauffage (106, 206, 306) ; et
déterminer une indication de la quantité de résidus de substrat formant aérosol dans la cavité de dispositif (104, 204, 304) ou sur le dispositif de chauffage (106, 206, 306) sur la base de signaux reçus depuis le détecteur de résidus.

14. Système de génération d'aérosol selon la revendication 13, dans lequel :
le dispositif de commande de boîtier (510, 610) est en outre configuré pour :
comparer l'indication déterminée de la quantité de résidus de substrat formant aérosol dans la cavité du dispositif (104, 204, 304) ou sur le dispositif de chauffage (106, 206, 306) à un seuil ; et
envoyer un signal de nettoyage au dispositif de commande (110, 210, 310) du dispositif de génération d'aérosol lorsque l'indication déterminée de la quantité de résidus de substrat formant aérosol dans la cavité du dispositif (104, 204, 304) ou sur le dispositif de chauffage (106, 206, 306) dépasse le seuil ; et
le dispositif de commande de dispositif est en outre configuré pour :
alimenter en puissance le dispositif de chauffage (106, 206, 306) pour élever la température du dispositif de chauffage (106, 206, 306) à une première température pour chauffer le substrat formant aérosol reçu dans la cavité suffisamment pour qu'un aérosol soit formé ;
recevoir des signaux de nettoyage provenant du dispositif de commande (510, 610) du boîtier (500, 600) ; et
alimenter la puissance vers le dispositif de chauffage (106, 206, 306) pour élever la température du dispositif de chauffage (106, 206, 306) à une deuxième température, supérieure à la première température, pour libérer thermiquement des matériaux organiques qui adhèrent à ou sont déposés dans la cavité (104, 204, 304) ou sur le dispositif de chauffage (106, 206, 306) lorsqu'un signal de nettoyage est reçu depuis le dispositif de commande de boîtier (510, 610) .

15. Dispositif détecteur de résidus (700) pour détecter un résidu de substrat formant aérosol dans un dispositif de génération d'aérosol, le dispositif détecteur de résidus (700) comprenant :
une cavité de détecteur de résidus (704) pour recevoir l'au moins une portion d'un dispositif de génération d'aérosol ;
un détecteur de résidus agencé pour capter un résidu de substrat formant aérosol sur la portion d'un dispositif de génération d'aérosol reçue dans la cavité de détecteur de résidus (704) ; et
un dispositif de commande (714) configuré pour :
recevoir des signaux provenant du détecteur de résidus indiquant la quantité de résidus de substrat formant aérosol sur la portion du dispositif de génération d'aérosol reçue dans la cavité de détecteur de résidus (704) ; et
déterminer une indication de la quantité de résidus de substrat formant aérosol sur la portion du dispositif de génération d'aérosol reçue dans la cavité de détecteur de résidus (704) sur la base des signaux reçus depuis le détecteur de résidus.
